# EUROPEAN PATENT SPECIFICATION

(11) **EP 4 386 241 B1**
(45) Date of publication and mention of the grant of the patent: **05.11.2025**
(21) Application number: 23210373.9
(22) Date of filing: 16.11.2023
(51) Int. Cl.: F16K 31/00, G05D 23/02, F24F 11/41, G05D 23/01, F16K 27/12

(54) **METHOD OF FROST PROTECTION AND VALVE ASSEMBLY FOR FROST PROTECTION AND/OR VOLUNTARY WITHDRAWAL**
VERFAHREN ZUM FROSTSCHUTZ UND VENTILANORDNUNG ZUM FROSTSCHUTZ UND/ODER ZUR FREIWILLIGEN ENTNAHME
MÉTHODE DE PROTECTION CONTRE LE GEL ET ENSEMBLE DE VANNES POUR LA PROTECTION CONTRE LE GEL ET/OU LE RETRAIT VOLONTAIRE

(30) Priority: 15.12.2022 IT 202200025698
(43) Date of publication of application: 19.06.2024
(73) Proprietor: Ariston S.p.A., 60044 Fabriano (AN) (IT)
(72) Inventor: MEDURI, Simone, I-60044 FABRIANO, ANCONA (IT); MARCHESI, Marco, I-60044 FABRIANO, ANCONA (IT)
(74) Representative: Leihkauf, Steffen Falk

(56) References cited:
- EP-A1- 4 006 393
- DE-T2- 68 906 388
- US-A- 4 460 006

## Description

The present invention relates to a method of anti-freezing protection of a fluid pipe, in particular of an air conditioning system. The present invention further relates to an anti-freezing and/or voluntary drawing valve assembly connectable in communication with a circuit of fluid, in particular water, in household or industrial air conditioning systems, with the aim of protecting the system from damage due to the freezing of the fluid, and discharging and/or drawing the fluid from the system.

Anti-freezing valves are devices known per se which are connected to pipings in which a fluid circulates, e.g., water for supplying household or industrial air conditioning systems, and which automatically open a discharge opening upon reaching a temperature close to the fluid freezing temperature, to empty the pipings and the system in order to avoid damage to the pipings and components of the air conditioning system.

Anti-freezing valves are known, provided with a thermostat, usually a wax thermostat, in which the wax varies its volume as a function of the fluid temperature and acts on a movable shutter which takes a closing position when the fluid temperature is above a predefined threshold, and an opening position when the fluid temperature drops below the predefined threshold. If the fluid is water, the anti-freezing valve is calibrated to open when the fluid temperature is close to 0 °C.

A disadvantage of anti-freezing valves is that they open and close depending only on the temperature of the fluid in the piping and cannot consider the temperature of the external environment, which varies significantly depending on the season and significantly affects the risk of the fluid freezing when the fluid temperature is close to the freezing point.

In particular, when the circulating fluid is very cold and the outside temperature is relatively high (summer air conditioning situation). Anti-freezing valves can cause a discharge of the fluid even in the absence of a real risk of the fluid freezing.

A further disadvantage of anti-freezing valves and their use according to the prior part is the impossibility to:
- Prevent a discharge of the fluid through the anti-freezing valve by a voluntary and manual user command,
- cause a discharge of the fluid regardless of the fluid temperature (and thus of the position of the anti-freezing valve shutter) through a voluntary and manual user command.

Document EP4006393A1, which can be considered the prior part close to the present invention, describes a valve kit combining a first thermostatic function responsive to the fluid temperature (traditional anti-freezing valve) with a second thermostatic function responsive to the external ambient temperature (further thermostatic valve), in order to reduce the risk of undesired discharge of fluid when the fluid temperature approaches its freezing temperature, but the outside temperature is sufficiently high to overcome a real risk of the fluid freezing.

The valve kit described in EP4006393A1 requires a valve body having a complex shape with five openings, specially developed, which supports the functions of both thermostatic valves, making it impossible, for example, to completely replace only one of the two thermostatic valves without also intervening on the other thermostatic valve, since both thermostatic valves share the same valve body.

It is the object of the invention to overcome at least some of the advantages mentioned with reference to the prior art.

It is a particular object of the invention to provide a method of anti-freezing protection and an anti-freezing and/or voluntary drawing valve assembly, connectable to a circuit of fluid, particularly water, in particular in household or industrial air conditioning systems, having features such as to automatically control a discharge of the fluid circuit, depending on both the fluid temperature and the outside temperature, and
- Prevent a discharge of the fluid through the anti-freezing valve by a voluntary and manual user command, and/or
- cause a discharge of the fluid regardless of the fluid temperature by a voluntary and manual user command.

It is a further particular object of the invention to configure the anti-freezing and/or voluntary drawing valve assembly so as to simplify the structure thereof and make it modular, and to allow, during manufacturing and assembly, the use of individually simple and reliable components which are commercially available at advantageous costs.

### Brief description of the invention

At least some of the objectives of the invention are achieved by a method of anti-freezing protection of a fluid pipe, in particular of an air conditioning system, according to claim 1, and by an anti-freezing and/or voluntary drawing valve assembly according to claim 3. The dependent claims relate to advantageous and preferred embodiments.

According to an aspect of the invention, a method of anti-freezing protection of a fluid pipe, in particular of an air conditioning system (22), comprises the steps of:
- forming a valve assembly (1) connecting, in mutual fluid communication, a thermostatic anti-freezing valve (2) responsive to a fluid temperature of a fluid in contact with the anti-freezing valve (2) itself, a thermostatic valve (3) responsive to an ambient temperature outside the valve assembly (1), and optionally, a drawing tap (4) being manually openable and closable,
- making an inlet opening (5) in the valve assembly (1),
- making a discharge opening (6) in the valve assembly (1) in communication with the inlet opening (5),
- optionally, making a drawing opening (7) in the valve assembly (1) in communication with the inlet opening (5),
- making a first and only fluid communication (8) in the valve assembly (1) between the inlet opening (5) and the discharge opening (6),
- connecting the inlet opening (5) of the valve assembly (1) to the fluid pipe so that a fluid from the fluid pipe enters the valve assembly (1),
- using the anti-freezing valve (2) to open and close the discharge opening (6) automatically depending on the fluid temperature, so as to automatically discharge the fluid from the valve assembly (1) if there is a risk of the fluid freezing,
- using the thermostatic valve (3) to automatically open and close, depending on the ambient temperature, said first and only fluid communication (8) between the inlet opening (5) and the discharge opening (6),
- using a knob (21) of the thermostatic valve (3) to manually close and/or open the first fluid communication (8), regardless of the ambient temperature,
optionally, manually operating the drawing tap (4) to close and open the drawing opening (7) and to draw the fluid from the valve assembly (1) and the fluid pipe.

According to a further aspect, an actuation mechanism (16) of the thermostatic valve (3) comprises:
- a shutter (17),
- a spring system (18),
- a thermostat (19) in thermal contact with the environment outside the valve assembly (1) and adjusted or adjustable to a switching ambient temperature value of the thermostatic valve (3),
- said manual adjustment knob (21) interacting with the thermostat (19) and the shutter (17) and allowing an adjustment or setting of the switching ambient temperature value and, additionally, a manual closing at least of the first fluid communication (8), regardless of the ambient temperature.

According to a further aspect of the invention, an anti-freezing and/or voluntary drawing valve assembly comprises:
- a thermostatic anti-freezing valve 2 responsive to a fluid temperature of a fluid in contact with the anti-freezing valve 2 itself,
- a thermostatic valve 3 responsive to an ambient temperature outside the valve assembly 1,
- optionally, a manually openable and closable drawing tap 4,
- an inlet opening 5 connectable to a pipe for a fluid to enter the valve assembly 1,
- a discharge opening 6 in communication with the inlet opening 5 for discharging the fluid from the valve assembly 1,
- optionally, a drawing opening 7 in communication with the inlet opening 5 for drawing the fluid from the valve assembly 1,
where:
- the anti-freezing valve 2 is connected so as to open and close the discharge opening 6 depending on the fluid temperature,
- the thermostatic valve 3 is connected so as to automatically open and close, depending on the ambient temperature, a first and only fluid communication 8 between the inlet opening 5 and the discharge opening 6,
said thermostatic valve 3 further having a knob allowing the first fluid communication 8 between the inlet opening 5 and the discharge opening 6 to be manually closed, regardless of the ambient temperature,
- optionally, the drawing tap 4 is connected and manually operable to close and open the drawing opening 7.

According to a further aspect, an actuation mechanism (16) of the thermostatic valve (3) comprises:
- a shutter (17),
- a spring system (18),
- a thermostat (19) in thermal contact with the environment outside the valve assembly (1) and adjusted or adjustable to a switching ambient temperature value of the thermostatic valve (3),
- said manual adjustment knob (21) interacting with the thermostat (19) and the shutter (17) and allowing an adjustment or setting of the switching ambient temperature value and, additionally, a manual closing at least of the first fluid communication (8), regardless of the ambient temperature.

The configuration of the valve assembly 1 reconciles the needs to automatically command a discharge of the fluid, depending on both the temperature of the fluid and the ambient temperature, allow preventing a discharge of the fluid through the anti-freezing valve through a voluntary and manual user command, and allow a discharge or drawing of the fluid regardless of the temperature of the fluid, through a voluntary user command.

According to a further innovative aspect, the anti-freezing and/or voluntary drawing valve assembly comprises an openable/closable thermally insulating outer casing, having a variable wall thickness to obtain a thermal insulation layer between the liquid inside the valve assembly and the external environment, but which allows the thermostatic valve to be however in an indirect and/or attenuated heat exchange relationship with the outside.

### Brief description of the drawings

In order to better understand the invention and appreciate the advantages thereof, some non-limiting embodiments thereof will be described below with reference to the accompanying drawings, in which:
- Fig. 1 is a perspective view of an anti-freezing and/or voluntary drawing valve assembly according to an embodiment,
- Fig. 2 is a perspective view of the anti-freezing and/or voluntary drawing valve assembly in figure 1 with a thermally insulating casing open,
- Fig. 3 is a perspective view of the anti-freezing and/or voluntary drawing valve assembly in figure 1 with the thermally insulating casing removed,
- Fig. 4 is a perspective view of the thermally insulating casing of the voluntary anti-freezing and/or drawing valve assembly in figure 1,
- Fig. 5 is a top view of the anti-freezing and/or voluntary drawing valve assembly according to an embodiment, with an indication of fluid communication paths in a first operating condition,
- Fig. 6 is a top view of the anti-freezing and/or voluntary drawing valve assembly in figure 5, with an indication of fluid communication paths in a second operating condition,
- Fig. 7 is a diagrammatic section view of a module of a thermostatic valve responsive to the ambient temperature outside the anti-freezing and/or voluntary drawing valve assembly, with an indication of fluid communication paths in the second operating condition shown in figure 5,
- Fig. 8 is a diagrammatic section view of a module of a thermostatic valve responsive to the ambient temperature outside the anti-freezing and/or voluntary drawing valve assembly, with an indication of fluid communication paths in the first operating condition shown in figure 6,
- Fig. 9 shows the application of the anti-freezing and/or voluntary drawing valve assembly to an outdoor unit of an air conditioning system, e.g., a heat pump, according to an embodiment,
- Fig. 10 is a top view of the anti-freezing and/or voluntary drawing valve assembly according to a further embodiment, with an indication of fluid communication paths in a first operating condition,
- Fig. 11 is a top view of the anti-freezing and/or voluntary drawing valve assembly in figure 10, with an indication of fluid communication paths in a second operating condition,
- Fig. 12 is a diagrammatic section view of a module of a thermostatic valve responsive to the ambient temperature outside the anti-freezing and/or voluntary drawing valve assembly, with an indication of fluid communication paths in the second operating condition shown in figure 10,
- Fig. 13 is a diagrammatic section view of a module of a thermostatic valve responsive to the ambient temperature outside the anti-freezing and/or voluntary drawing valve assembly, with an indication of fluid communication paths in the first operating condition shown in figure 11,
- Fig. 14 is a top view of the anti-freezing and/or voluntary drawing valve assembly according to a further embodiment, with an indication of fluid communication paths in a first operating condition,
- Fig. 15 is a top view of the anti-freezing and/or voluntary drawing valve assembly in figure 14, with an indication of fluid communication paths in a second operating condition,
- Fig. 16 is a diagrammatic section view of a module of a thermostatic valve responsive to the ambient temperature outside the anti-freezing and/or voluntary drawing valve assembly, with an indication of fluid communication paths in the second operating condition shown in figure 14,
- Fig. 17 is a diagrammatic section view of a module of a thermostatic valve responsive to the ambient temperature outside the anti-freezing and/or voluntary drawing valve assembly, with an indication of fluid communication paths in the first operating condition shown in figure 15,
- Fig. 18 is a top view of the anti-freezing and/or voluntary drawing valve assembly according to a further embodiment, with an indication of fluid communication paths in a first operating condition,
- Fig. 19 is a top view of the anti-freezing and/or voluntary drawing valve assembly in figure 18, with an indication of fluid communication paths in a second operating condition,
- Fig. 20 is a diagrammatic section view of a module of a thermostatic valve responsive to the ambient temperature outside the anti-freezing and/or voluntary drawing valve assembly, with an indication of fluid communication paths in the second operating condition shown in figure 18,
- Fig. 21 is a diagrammatic section view of a module of a thermostatic valve responsive to the ambient temperature outside the anti-freezing and/or voluntary drawing valve assembly, with an indication of fluid communication paths in the first operating condition shown in figure 19,
- Fig. 22 is a top view of the anti-freezing and/or voluntary drawing valve assembly according to a further embodiment, with an indication of fluid communication paths in a first operating condition,
- Fig. 23 is a top view of the anti-freezing and/or voluntary drawing valve assembly in figure 22, with an indication of fluid communication paths in a second operating condition,
- Fig. 24 is a diagrammatic section view of a module of a thermostatic valve responsive to the ambient temperature outside the anti-freezing and/or voluntary drawing valve assembly, with an indication of fluid communication paths in the second operating condition shown in figure 22,
- Fig. 25 is a diagrammatic section view of a module of a thermostatic valve responsive to the ambient temperature outside the anti-freezing and/or voluntary drawing valve assembly, with an indication of fluid communication paths in the first operating condition shown in figure 23,
- Fig. 26 shows an operation flow diagram of the anti-freezing and/or voluntary drawing valve assembly according to an embodiment,
- Figs. 27 and 27A show operation flow diagrams of the anti-freezing and/or voluntary drawing valve assembly according to a further embodiment compatible with the embodiment in figures 5 to 8, and 18 to 21,
- Figs. 28 and 28A show operation flow diagrams of the anti-freezing and/or voluntary drawing valve assembly according to a further embodiment compatible with the embodiment in figures 10 to 13, 14 to 17, and 22 to 25.

### Detailed description of embodiments

With reference to the figures, an anti-freezing and/or voluntary drawing valve assembly 1 is intended to be connected to a fluid pipe, in particular of an air conditioning system.

The valve assembly 1 allows the system to be emptied of said fluid if temperature conditions arise such as to risk the freezing of the fluid itself inside the pipe and the system. In particular, the fluid can be water or another fluid used in household or industrial air conditioning systems. Depending to the fluid used, the calibration temperatures of the valve assembly 1 can be changed, without however modifying the operating principles thereof. Within the present description, water will be considered as the reference use fluid.

The valve assembly 1 comprises:
- a thermostatic anti-freezing valve 2 responsive to a fluid temperature of a fluid in contact with the anti-freezing valve 2 itself,
- a thermostatic valve 3 responsive to an ambient temperature outside the valve assembly 1,
- optionally, a manually openable and closable drawing tap 4,
- an inlet opening 5 connectable to a pipe for a fluid to enter the valve assembly 1,
- a discharge opening 6 in communication with the inlet opening 5 for discharging the fluid from the valve assembly 1,
- optionally a drawing opening 7 in communication with the inlet opening 5 for drawing the fluid from the valve assembly 1,
where:
- the anti-freezing valve 2 is connected so as to open and close the discharge opening 6 depending on the fluid temperature,
- the thermostatic valve 3 is connected so as to automatically open and close, depending on the ambient temperature, a first and only fluid communication 8 between the inlet opening 5 and the discharge opening 6,
said thermostatic valve 3 further having a knob allowing the first fluid communication 8 between the inlet opening 5 and the discharge opening 6 to be manually closed, regardless of the ambient temperature,
- optionally, the drawing tap 4 is connected and manually operable to close and open the drawing opening 7.

The configuration of the valve assembly 1 reconciles the needs to automatically command a discharge of the fluid, depending on both the temperature of the fluid and the ambient temperature, allow preventing a discharge of the fluid through the anti-freezing valve 2 through a voluntary user command, and allow a discharge or drawing of the fluid regardless of the temperature of the fluid, through a voluntary user command.

### Detailed description of the anti-freezing valve 2

According to an embodiment, the anti-freezing valve 2 is configured to automatically open the discharge opening (6) when the fluid temperature drops below a predefined, but preferably calibratable, fluid threshold value, and to automatically close the first fluid communication (8) when the fluid temperature exceeds the predefined fluid threshold value.

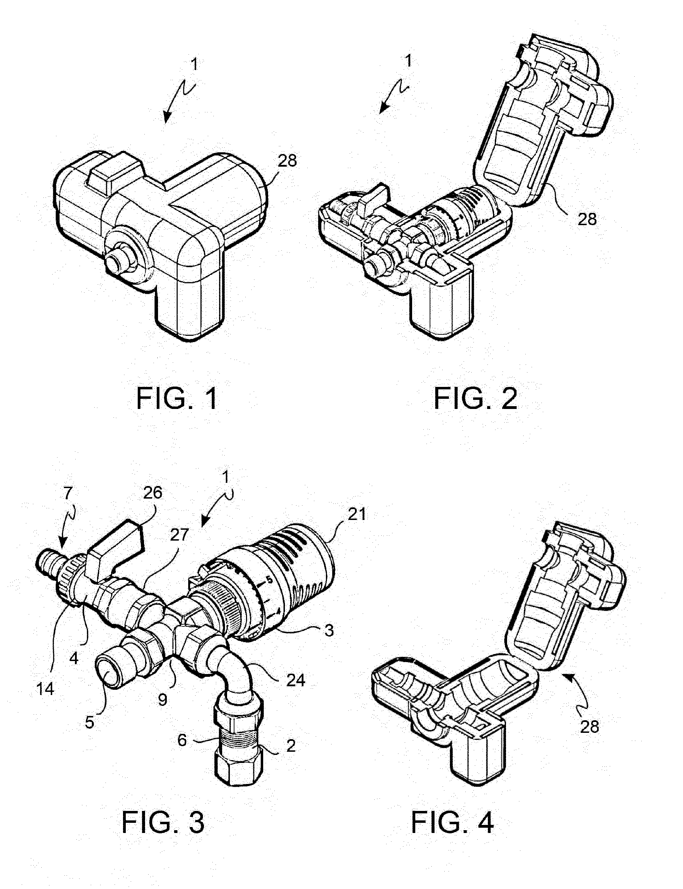

The anti-freezing valve 2 is preferably mounted, for example screwed, directly into the discharge opening 6 **(****figure 3****).**

The anti-freezing valve 2 forms an inlet and an outlet, a shutter, a spring system, as well as a thermostat, e.g., made of thermo-expandable wax, in thermal contact with the fluid and calibrated or calibratable to a temperature close to the fluid freezing temperature, for example a temperature of 2°C in the case of water.

The spring system permanently elastically biases the shutter to an open position (inherent safety function), thus placing the inlet and outlet of the anti-freezing valve 2 in communication, while the thermostat, as the fluid temperature increases, expands by moving the shutter (against the elastic preload) up to a closed position, interrupting the communication between the inlet and outlet, when the fluid temperature exceeds the predefined fluid threshold value.

### Detailed description of the thermostatic valve 3

According to an embodiment, the thermostatic valve 3 is configured to automatically open the first fluid communication (8) when the ambient temperature drops below a preferably adjustable or settable, predefined ambient threshold value, and to automatically close the first fluid communication (8) when the ambient temperature exceeds the predefined ambient threshold value.

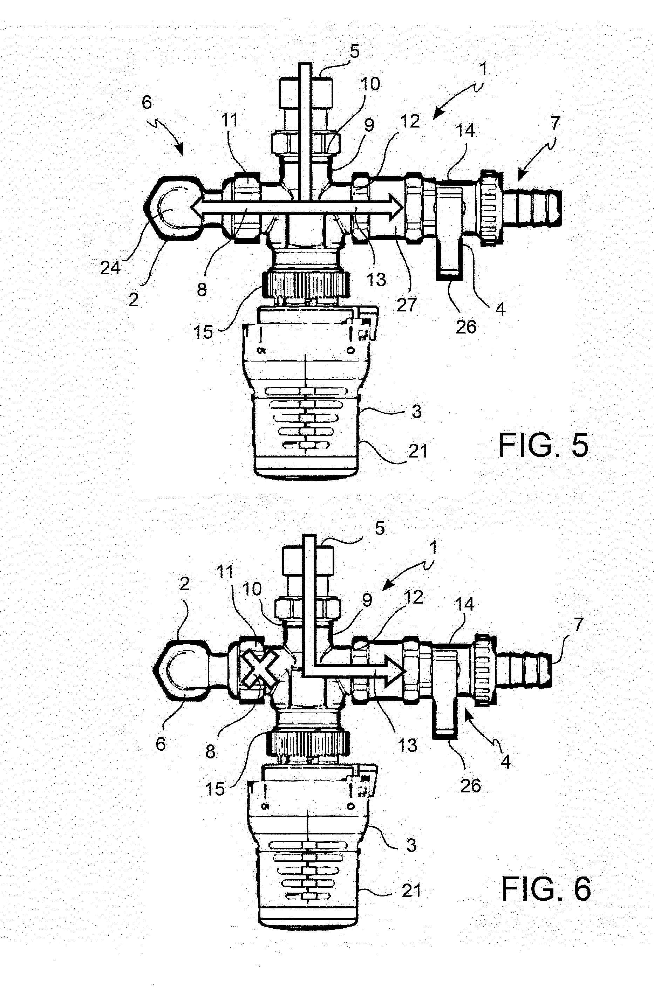

The thermostatic valve 3 comprises a three-way, cross-shaped tubular valve body 9 **(****figures 5, 6****,** **10, 11****)** forming a first tubular connection end 10 which forms the inlet opening 5, a second tubular connection end 11 which forms the first fluid communication 8, a third tubular connection end 12 which forms a second fluid communication 13 between the inlet opening 5 and the drawing opening 7, as well as a tubular connection seat 15, preferably threaded, which receives an actuation mechanism 16 of the thermostatic valve 3.

The first tubular connection end 10 and the connection seat 15 are arranged opposite to each other, forming the ends of a first line of the cross shape, whereas the second tubular connection end 11 and the third tubular connection end 12 are arranged opposite to each other, forming the ends of a second line of the cross shape, transverse (perpendicular) to the first line. The valve body 9 is formed in a single piece of metal.

This configuration of the valve body 9 and a particular circumstance of compatibility of operating temperature ranges observed by the inventors, allow the use, as a thermostatic valve 3 or as an actuation mechanism 16, of thermostatic valves for interior radiators or their actuation mechanisms commercially available at low cost and without any need for further modifications or adaptations **(****figures 3****,** **5, 6****).**

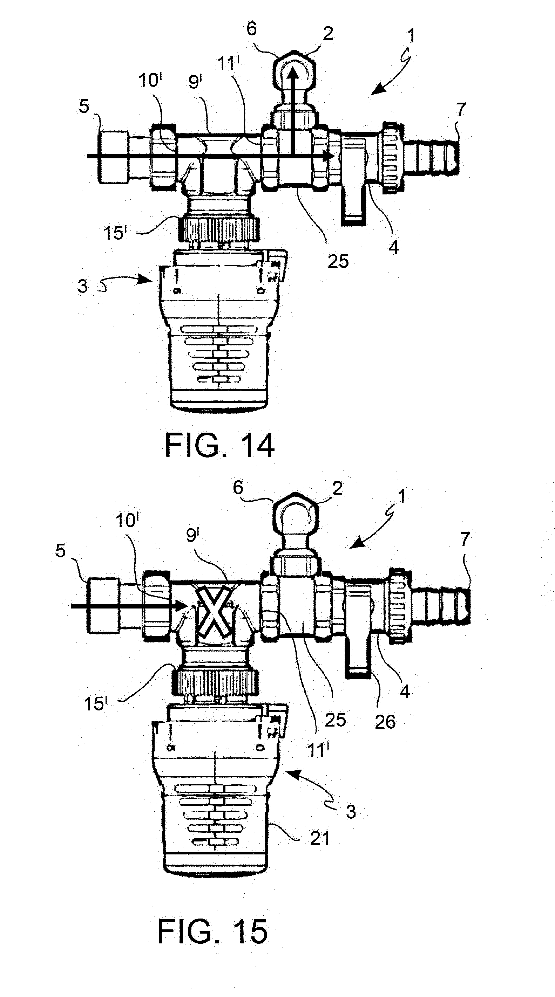

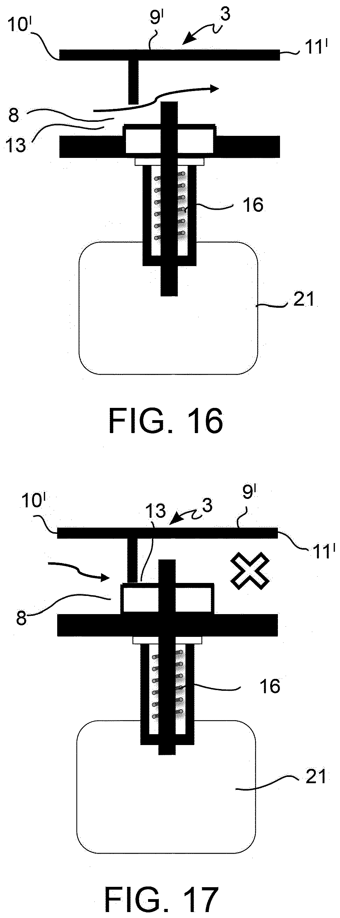

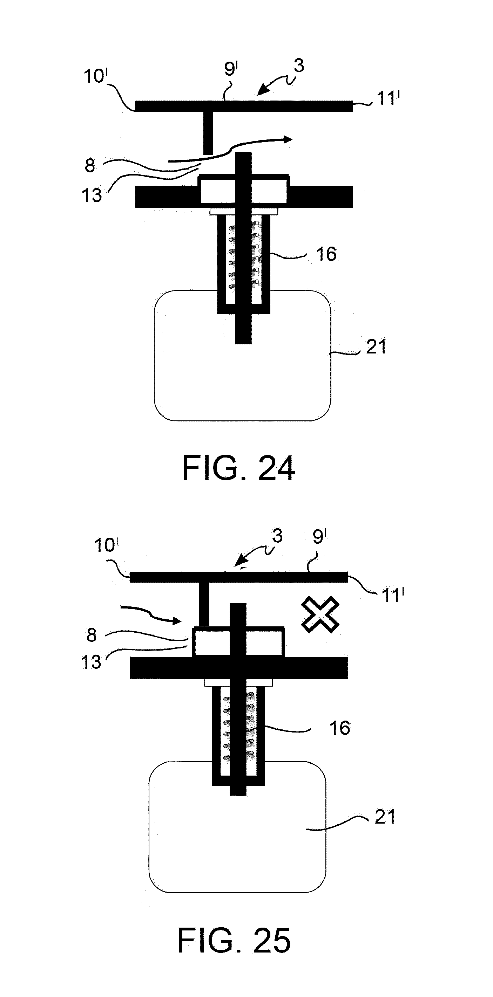

According to an alternative embodiment (with reference to the configuration of the valve body 9, 9'), the thermostatic valve 3 comprises a two-way, T-shaped tubular valve body 9' **(****figures 14, 15****,** **16, 17****,** **22, 23****,** **24, 25****)** forming a first tubular connection end 10' which forms the inlet opening 5, a second tubular connection end 11' which forms (in a single lumen) both the first fluid communication 8 and a second fluid communication 13 between the inlet opening 5 and the drawing opening 7, as well as a tubular connection seat 15', preferably threaded, which receives an actuation mechanism 16 of the thermostatic valve 3.

The first tubular connection end 10' and the second tubular connection end 11' are arranged opposite to each other, forming the ends of a first line of the T-shape, whereas the connection seat 15' forms a second line of the T-shape, transverse (perpendicular) to the first line. The valve body 9' is formed in a single piece of metal.

Also this configuration of the valve body 9' and a particular circumstance of compatibility of operating temperature ranges observed by the inventors, allow the use, as a thermostatic valve 3 or as an actuation mechanism 16, of thermostatic valves for interior radiators or their actuation mechanisms commercially available at low cost and without any need for further modifications or adaptations **(****figures 14, 15****,** **22, 23****).**

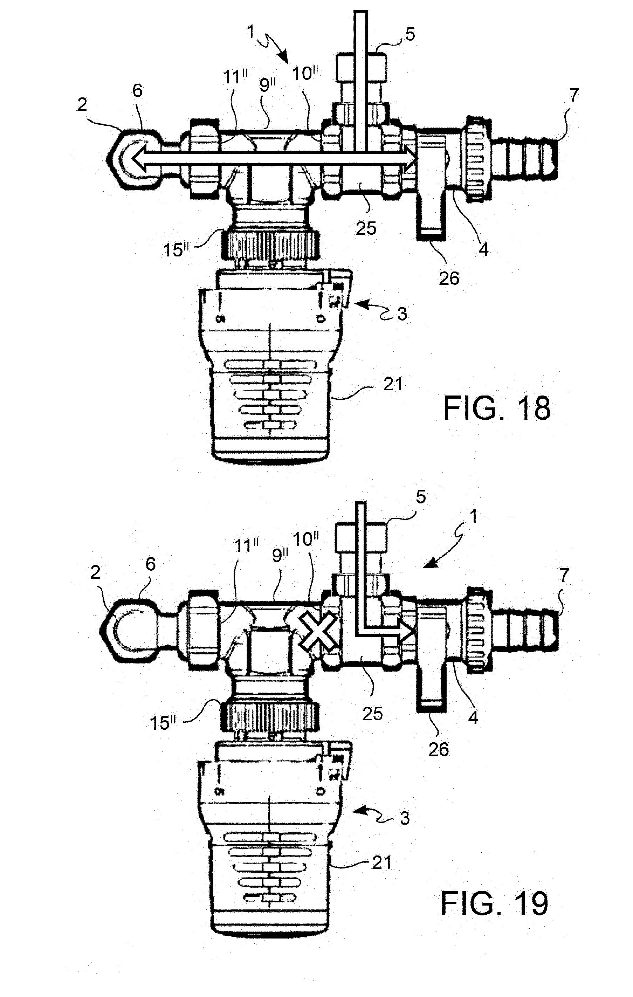

According to a further alternative embodiment (with reference to the configuration of the valve body 9, 9', 9"), the thermostatic valve 3 comprises a two-way, T-shaped tubular valve body 9" **(****figures 18****, 19),** which forms a first tubular connection end 10" and a second tubular connection end 11" which together form the first and only fluid communication 8, but which do not form the inlet opening 5 and do not form a second fluid communication 13 between the inlet opening 5 and the drawing opening 7. The second fluid communication 13 between the inlet opening 5 and the drawing opening 7 does not involve (and does not cross) the valve body 9".

Also in this case, the valve body 9" further forms a tubular connection seat 15", preferably threaded, which receives an actuation mechanism 16 of the thermostatic valve 3.

The first tubular connection end 10" and the second tubular connection end 11" are arranged opposite to each other, forming the ends of a first line of the T-shape, whereas the connection seat 15" forms a second line of the T-shape, transverse (perpendicular) to the first line. The valve body 9" is formed in a single piece of metal.

Also this configuration of the valve body 9" and a particular circumstance of compatibility of operating temperature ranges observed by the inventors, allow the use, as a thermostatic valve 3 or as an actuation mechanism 16, of thermostatic valves for interior radiators or their actuation mechanisms commercially available at low cost and without any need for further modifications or adaptations **(**figures 18**, 19).**

Moreover, the configuration of the valve body 9, 9' makes the valve assembly 1 modular, with clearly distinct structural and functional units being optimizable independently of one another, and substantially reduces the manufacturing costs of the valve assembly 1 as compared to the prior art.

According to an embodiment, the actuation mechanism 16 comprises a shutter 17, a spring system 18, and a thermostat 19, e.g., made of thermo-expandable wax, in thermal contact with the environment outside the valve assembly 1, adjusted or adjustable at a switching ambient temperature of the thermostatic valve 3, e.g., in a range between 10°C and 15°C.

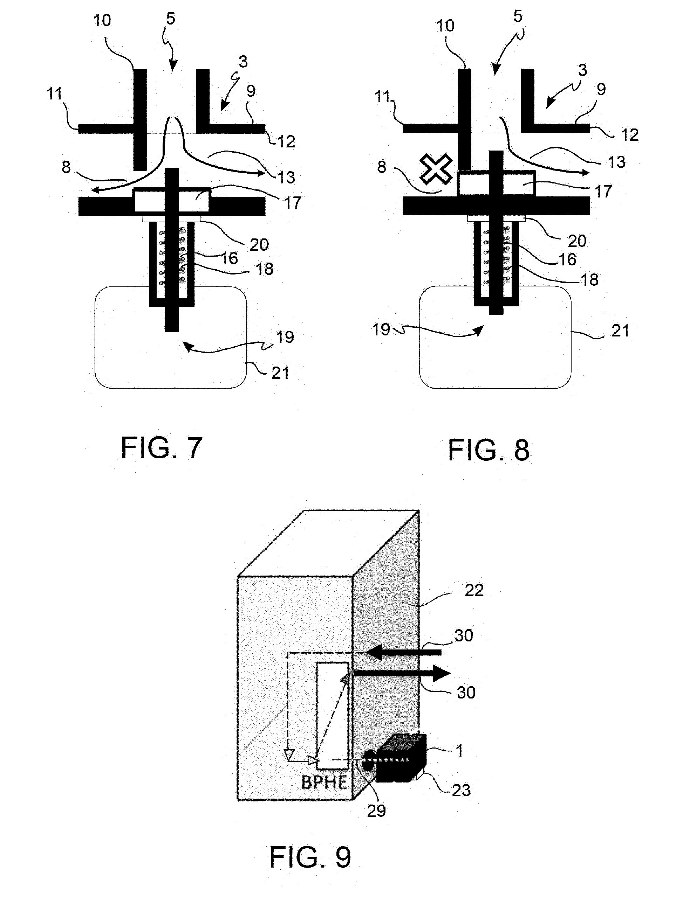

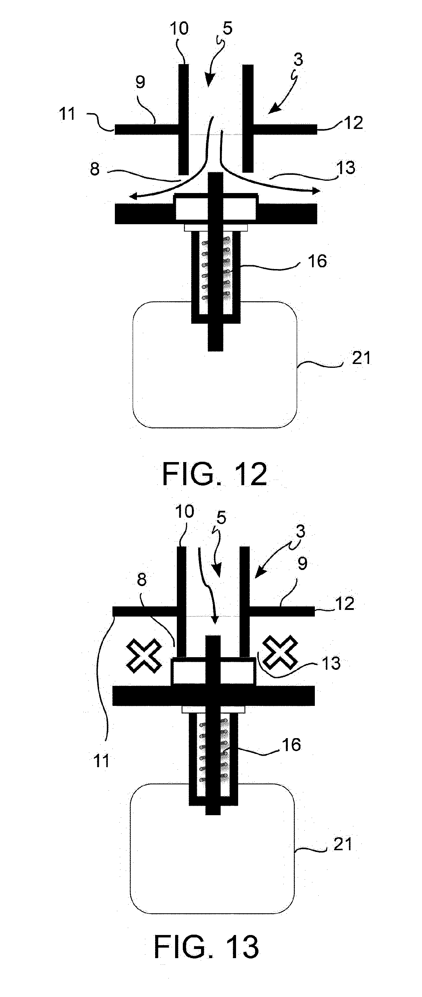

The spring system 18 permanently elastically biases the shutter 17 to an open position, opening the first fluid communication 8, while the thermostat 19, as the ambient temperature increases, expands, moving the shutter 17 (against the elastic preload) up to a closed position, interrupting the first fluid communication 8, when the ambient temperature exceeds the predefined ambient threshold value **(****figures 7, 8****,** **12, 13****).**

According to an embodiment, in a closed position of the thermostatic valve 3 (corresponding to the closed position of the shutter 17, for example), the thermostatic valve 3 interrupts the first fluid communication 8, but does not also interrupt a second fluid communication 13 between the inlet opening 5 and the drawing opening 7 **(****figures 6****, 8).**

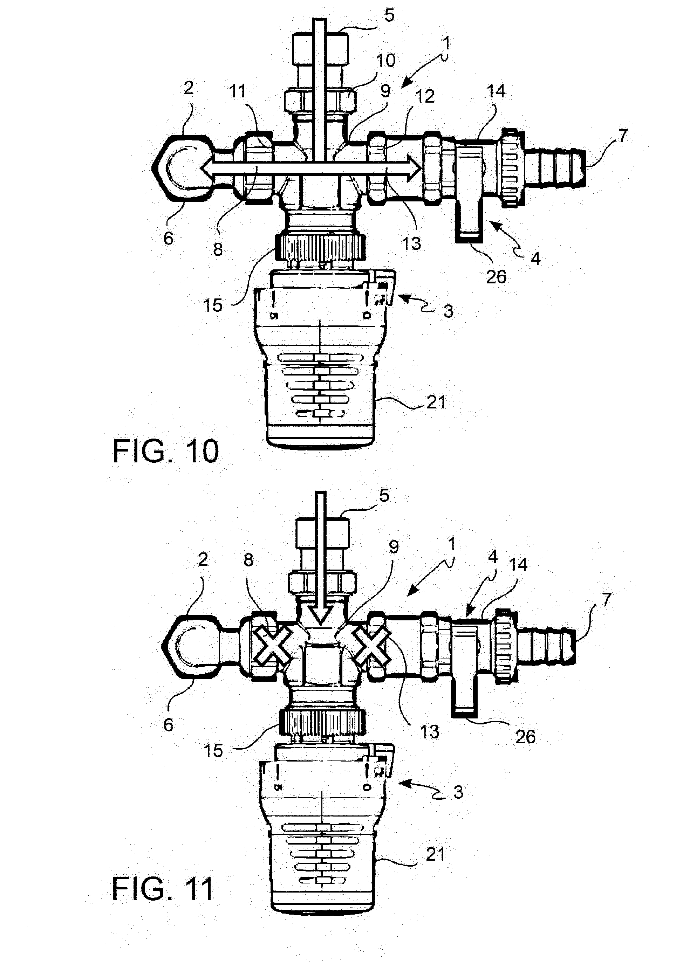

According to an alternative embodiment, in a closed position of the thermostatic valve 3 (corresponding to the closed position of the shutter 17, for example), the thermostatic valve 3 interrupts both the first fluid communication 8 and also a second fluid communication 13 between the inlet opening 5 and the drawing opening 7 **(****figures 11****,** **13** **and** **figures 15****, 17).** Advantageously, in a closed position of the thermostatic valve 3 (corresponding to the closed position of the shutter 17, for example), the thermostatic valve 3 directly closes the passage of the inlet opening 5 of the valve assembly 1 **(****figures 11****,** **13****,** **15****,** **17****,** **23****,** **24****),** i.e., of the first tubular connection end 10, 10' of the valve body 9.

The thermostat 19 is in heat exchange communication (directly or indirectly, e.g., through a wall of an external housing) with the environment and, advantageously, thermally isolated from the fluid inside the valve assembly 1, for example through one or 20 more layers of heat-insulating material.

The operating mechanism 16 of the thermostatic valve 3 further comprises a manual adjustment knob 21 which interacts with the thermostat 19 and the shutter 17 and allows an adjustment or setting of the ambient threshold value and, in addition, a manual closing at least of the first fluid communication 8, regardless of the ambient temperature, for example to allow a replacement or maintenance of the anti-freezing valve 2 without having to discharge the fluid from the valve assembly 1 and thus from the air conditioning system 22 to which it is connected.

According to an embodiment, the interruption of the first fluid communication 8 by operating the manual adjustment knob 21 also simultaneously interrupts the second fluid communication 13 **(****figures 11****,** **13** **and** **figures 15****, 17).**

### Detailed description of the drawing tap 4

According to an embodiment, the drawing tap 4 comprises a tubular tap body 14, a tap shutter (not shown), e.g., spherical in shape, accommodated inside the tap body 14, and a tap knob 26 arranged outside the tap body 14 and connected to the tap shutter for manually actuating it to be opened and closed. The drawing tap 4 can be connected to the drawing opening 7 or form the drawing opening 7, in order to allow a voluntary drawing or discharge of the fluid regardless of the temperature conditions.

### Description of the vacuum breaker device

According to an embodiment, the valve assembly 1 can further comprise a vacuum breaker device 23 (known per se) connected in communication with the valve body 9, 9' and which compensates for the pressure with the external environment when a depression inside the valve body 9 increases beyond a depression threshold value.

The vacuum breaker device 23 can be accommodated in an appropriate, additional vacuum breaker seat, formed in the valve body 9.

### Description of the modular structure

According to an embodiment, the valve assembly 1 is modular, where the individual modules:
- anti-freezing valve 2,
- thermostatic valve 3,
- drawing tap 4,
- optionally the vacuum breaker device 23,
are all:
- separable from one another and individually and separately operable, replaceable, and repairable,
- connectable to one another by a threaded connection or threaded ring nut connection.

In particular, according to an embodiment, the thermostatic valve 3 is separately and individually operable and usable as a thermostatic valve of a radiator for indoor house spaces.

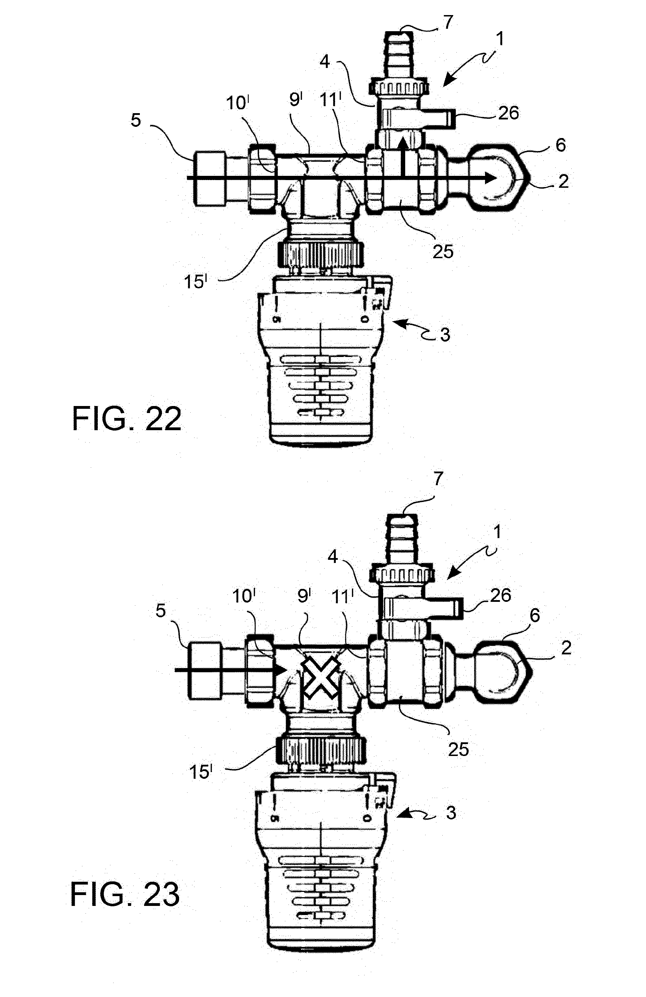

According to an embodiment **(****figures 3****,** **14****,** **18****,** **22****),** the anti-freezing valve 2 is connected to the second tubular connection end 11, 11', 11" of the valve body 9, 9', 9", e.g., by the interposition of:
- an elbow-shaped tubular portion 24 **(****figures 3****, 18)** and/or
- by the interposition of a T-shaped tubular portion 25 and an elbow-shaped tubular portion 24 **(****figures 14****, 22),** and/or
- by the interposition of a T-shaped tubular portion 25 **(****figures 14****, 22).**

This advantageously allows the discharge opening 6 to be oriented downwards, and in a transverse direction with respect to the adjustment knob 21, without thereby affecting the orientation of the adjustment knob 21.

According to an embodiment, the drawing tap 4 is connected:
- to the third tubular connection end 12 **(****figure 3****)** of the valve body 9, e.g., by the interposition of a linear tubular portion 27 **(****figure 3****),** or
- to the second tubular connection end 11' **(****figures 14****, 22)** of the valve body 9', e.g., by the interposition of a T-shaped tubular portion 25 **(****figures 14****, 22),** or
- to the first tubular connection end 10" **(****figure 18****)** of the valve body 9", e.g., by the interposition of a T-shaped tubular portion 25 **(****figure 18****).**

This allows the drawing opening 7 to be oriented in a transverse direction with respect to the adjustment knob 21 and the tap knob 26 upwards.

According to a first embodiment **(****figure 3****),** in a discharge flow path through the valve assembly 1, the inlet opening 5, the thermostatic valve 3, the anti-freezing valve 2, and the discharge opening 6 are arranged in this order,
whereas in a drawing path through the same valve assembly 1, the inlet opening 5, the thermostatic valve 3, the drawing tap 4, and the drawing opening 7 are arranged in this order, where the/a valve body 9 of the thermostatic valve 3 forms a branch of a common inlet flow path in the two distinct discharge and drawing flow paths.

According to a first embodiment **(****figure 14****),** in a discharge flow path through the valve assembly 1, the inlet opening 5, the thermostatic valve 3, the anti-freezing valve 2, and the discharge opening 6 are arranged in this order,
whereas in a drawing path through the same valve assembly 1, the inlet opening 5, the thermostatic valve 3, the drawing tap 4, and the drawing opening 7 are arranged in this order, where a T-shaped tubular portion placed downstream of a valve body 9' of the thermostatic valve 3 forms a branch of a common inlet flow path in the two distinct discharge and drawing flow paths.

In this embodiment, the anti-freezing valve is positioned in a space interposed between the thermostatic valve 32 and the drawing tap 4. Due to the branching downstream of the thermostatic valve 3, the thermostatic valve 3 is functionally associated with the inlet opening 5.

According to a third embodiment **(****figure 18****),** in a discharge flow path through the valve assembly 1, the inlet opening 5, the thermostatic valve 3, the anti-freezing valve 2, and the discharge opening 6 are arranged in this order,
whereas in a drawing path through the same valve assembly 1, the inlet opening 5, the drawing tap 4, and the drawing opening 7 are arranged in this order,
where the/a valve body 9" of the thermostatic valve 3 is not involved in the drawing flow path, where a T-shaped tubular portion placed upstream of a valve body 9" of the thermostatic valve 3 forms a branch of a common inlet flow path in the two distinct discharge and drawing flow paths.

According to a fourth embodiment **(****figure 22****),** in a discharge flow path through the valve assembly 1, the inlet opening 5, the thermostatic valve 3, the anti-freezing valve 2, and the discharge opening 6 are arranged in this order,
whereas in a drawing path through the same valve assembly 1, the inlet opening 5, the thermostatic valve 3, the drawing tap 4, and the drawing opening 7 are arranged in this order,
where a T-shaped tubular portion placed downstream of a valve body 9' of the thermostatic valve 3 forms a branch of a common inlet flow path in the two distinct discharge and drawing flow paths.

In this embodiment, the drawing tap 4 is structurally interposed in a space between the thermostatic valve 3 and the anti-freezing valve 2. Due to the branching downstream of the thermostatic valve 3, the thermostatic valve 3 is functionally associated with the inlet opening 5.

### Detailed description of the thermally insulating outer casing 28

According to an embodiment, the valve assembly 1 further comprises a thermally insulating outer casing 28 being openable/closable, for example by means of a Velcro closure. The thermally insulating casing 28 protects the components of the valve assembly 1 against weathering agents, but can have a thickness variation such as to allow the thermostatic valve 3 to be in a heat exchange relationship with the outside (indirectly, through the wall of the outer casing 28).

The thermally insulating casing 28 allows the use of thermostatic valves for indoor applications as a thermostatic valve 3 of the valve assembly 1 for outdoor use, e.g., to an outdoor unit of an air conditioning system **(****figure** 9).

The thermally insulating casing 28 makes the anti-freezing valve 2 less sensitive to the ambient temperature and more sensitive and reactive to the fluid temperature.

The thermal insulation layer of the thermally insulating casing 28 creates a delay in the response of the thermostatic valve 3 with respect to the temperature trend of the external environment, but such a delayed response is acceptable with reference to the operation of the thermostatic valve 3.

The thermally insulating outer casing 28 is particularly advantageous in embodiments in which the valve assembly 1 is installed on an end duct segment 29 (a so-called "dead branch") of a liquid circuit 30 of an air conditioning/heating/cooling system 22, in which end duct segment 29 the liquid does not pass but is stationary during the operation of the system 22.

On the one hand, the installation of the valve assembly 1 on an end duct segment 29 allows the valve assembly 1 to be placed in a lowest point of the liquid circuit 30 of the system 22, thus allowing the entire system 22 to be emptied of the liquid and thus fully performing the safety function.

On the other hand, without the thermal insulation provided by the thermally insulating outer casing 28, when the valve assembly 1 is installed on an end duct segment 29 ("dead branch"), there is a risk that a low ambient air temperature could cool down the stationary liquid in the valve assembly 1 to a temperature (no longer corresponding to the temperature of the liquid circulating in the liquid circuit 30 of the system 22) so low as to cause the opening of the anti-freezing valve 2 and cause an undesired emergency discharge.

### Detailed description of the operation

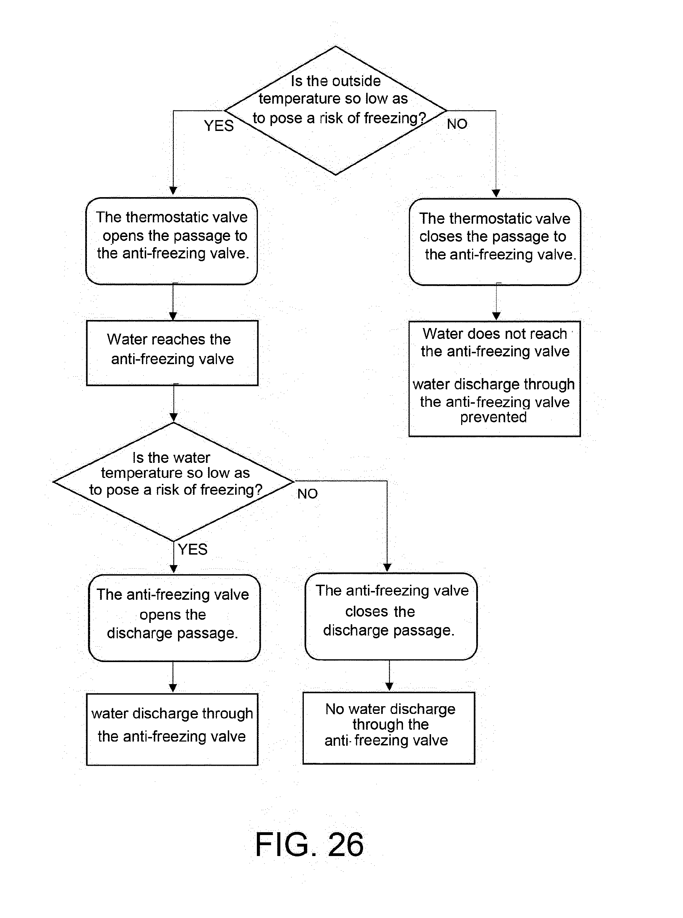

**Figure 26** shows a flow diagram of a first operating aspect of the valve assembly 1, concerning the discharge function in case of fluid freezing risk.

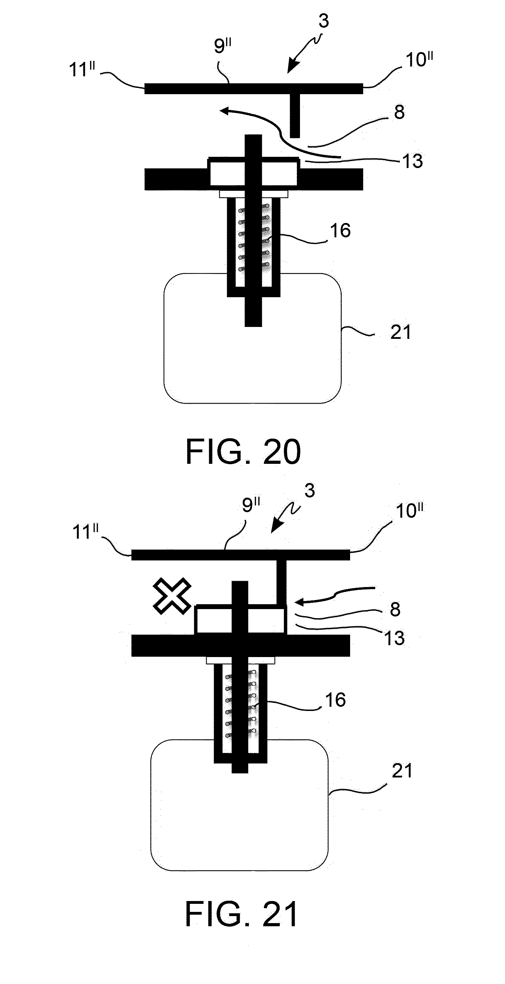

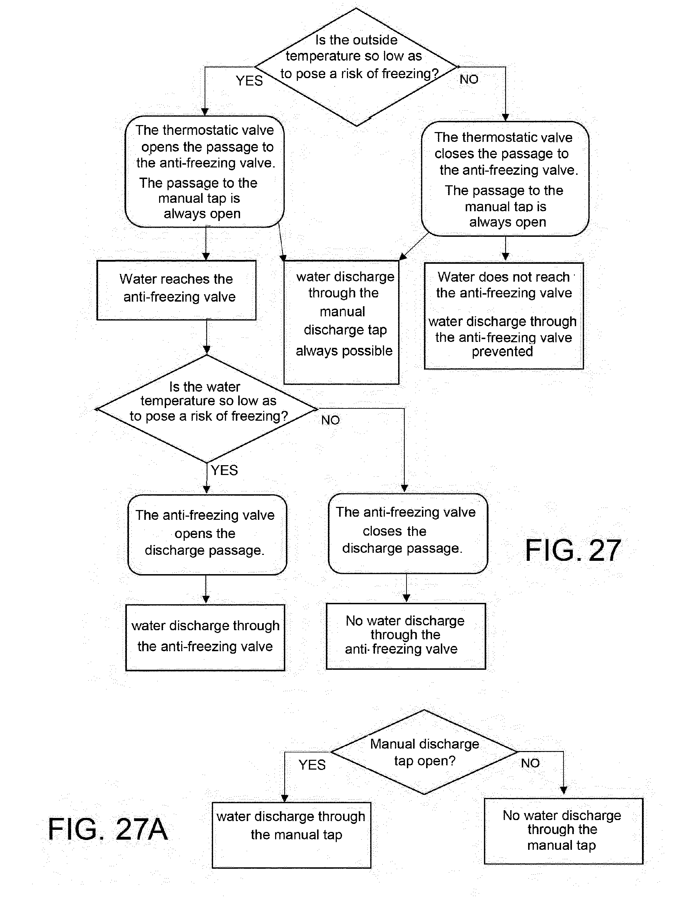

**Figures 27 and 27A** show a flow diagram of a further operating aspect of the valve assembly 1, concerning both the discharge function in case of fluid freezing risk and the voluntary drawing and discharge function, with reference to the embodiments in **figures 5 to 8****, and 18 to 21.**

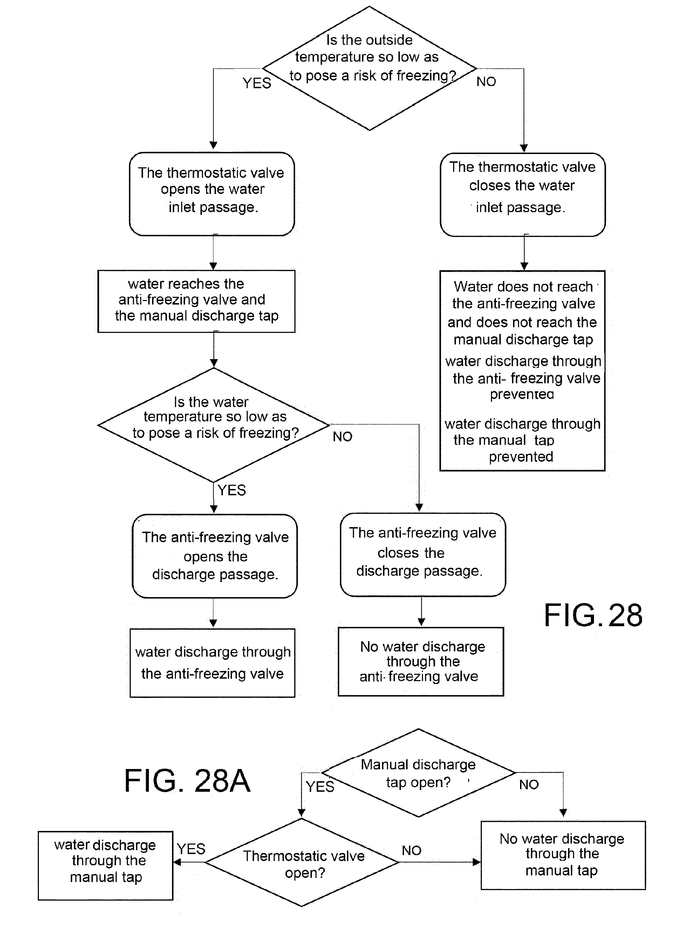

**Figures 28 and 28A** show a flow diagram of a further operating aspect of the valve assembly 1, concerning both the discharge function in case of fluid freezing risk and the voluntary drawing and discharge function, with reference to the embodiments in **figures 10 to 13****, 14 to 17,** **and** **22 to 25.**

In order to better understand the different operating configurations, it is necessary to identify four different scenarios with four different conditions of temperature of the fluid contained within the air conditioning system and ambient temperature, which vary significantly depending on the season.

The first scenario involves the use of the air conditioning system operating in the winter season, in which the outside temperature can be lower than 0°C but inside the system the water circulates at temperatures above 20°C for heating the spaces.

In the second scenario, still in the winter season, the air conditioning system is not working, in a situation in which the outside temperature can be lower than 0°C but inside the system the water is at low temperatures, even lower than 4°C.

The third scenario involves the use of the air conditioning system operating in the summer season, in which the outside temperature can be higher than 20°C but inside the system the water circulates at low temperatures, even lower than 4°C, for cooling the spaces.

In the fourth scenario, an air conditioning system is turned off in the summer season, in which the outside temperature can be higher than 20°C but no water circulates inside the system.

In the case of the first scenario, there is a condition in which the temperature of the water circulating in the system is higher than 20°C, therefore considerably far from the freezing conditions, although the outside temperature can be even lower than 0 °C. Since there is no need to discharge the system, the valve assembly 1 will be in the configuration shown in **figures 5****,** **7****,** **10****,** **12****,** **14****,** **16****,** **18****,** **20****,** **22****,** **24** but with the anti-freezing valve 2 closed. According to such a configuration, the thermostatic valve 3 allows the fluid to reach the anti-freezing valve 2 (since the ambient temperature is lower than the ambient threshold value), but the anti-freezing valve 2 closes the discharge opening 6 (since the fluid temperature is higher than the fluid threshold value), thus preventing the fluid from being discharged from the system.

In the case of the second scenario, there is a condition in which the temperature of the stationary water in the system is lower than 4°C, because the system itself is not operating. Moreover, the outside temperature can be lower than 0°C, therefore there can be a real risk of the water freezing inside the system and it needs to be discharged in order to avoid damaging the pipings and components of the air conditioning system. In this case, the valve assembly 1 is always in the condition shown in **figures 5****,** **7****,** **10****,** **12****,** **14****,** **16****,** **18****,** **20****,** **22****,** **24****,** but with the anti-freezing valve 2 open.

According to such a configuration, the thermostatic valve 3 allows the fluid to reach the anti-freezing valve 2 (since the ambient temperature is lower than the ambient threshold value), and the anti-freezing valve 2 opens the discharge opening 6 (since the fluid temperature is lower than the fluid threshold value), thus causing the discharge of the fluid from the system.

In the case of the third scenario, there is a condition in which the temperature of the water circulating in the system is lower than 4°C, therefore close to freezing temperature, but the outside temperature is higher than 20°C. If only the temperature of the liquid were considered, it would be possible to think that there could be a real risk of the water freezing inside the system, resulting in a need to discharge it to avoid damaging the pipings and components of the system itself. Actually, the outside temperature higher than 20°C and the circulation of water ensure that there is no real risk of freezing, therefore it is not necessary to discharge the system.

In this case, the valve assembly 1 is initially in the configuration shown in **figures 6****,** **8****,** **11****,** **13****,** **15****,** **17****,** **19****,** **21****,** **23****,** **25****.**

According to such a configuration, the thermostatic valve 3 does not allow the fluid to reach the anti-freezing valve 2 (since the ambient temperature is higher than the ambient threshold value), and the anti-freezing valve 2 does not open the discharge opening 6 (since the low temperature fluid does not come into contact with the anti-freezing valve) or opens the opening due to the inherent safety function thereof, but the discharge of the fluid from the system is still prevented.

Finally, in the case of the fourth scenario, there is a condition in which the air conditioning system is turned off, whereby water is not circulating inside the pipings, and the outside temperature is also higher than 20°C. In this case, the valve assembly 1 is in the configuration shown in **figures 6****,** **8****,** **11****,** **13****,** **15****,** **17****,** **19****,** **21****,** **23****,** **25****.**

According to such a configuration, the thermostatic valve 3 does not allow the fluid to reach the anti-freezing valve 2 (since the ambient temperature is higher than the ambient threshold value), and the anti-freezing valve 2 does not open the discharge opening 6 (since the fluid temperature exceeds the fluid threshold value or the high temperature fluid does not come into contact with the anti-freezing valve), thus preventing the discharge of the fluid from the system.

It is possible that, following the start of an automatic discharge or voluntary drawing operation, a pressure reduction condition is generated inside the pipings. Such a pressure reduction condition prevents any water still contained inside the pipings from being discharged from the discharge opening 6. The vacuum breaker device 23 allows the pressure inside the valve assembly 1 and the ambient pressure to be compensated for, so as to completely discharge the system to which the valve assembly 1 is connected.

In addition to the operating scenarios described so far, as shown in the flow charts in **figures 27, 27A****,** **28, 28A****,** the valve assembly 1 allows for voluntary drawing, voluntary discharge, and prevention of voluntary discharge regardless of the temperature conditions.

### Description of the method of anti-freezing protection

The method of anti-freezing protection of a fluid pipe, in particular of an air conditioning system (22), comprises the steps of:
- forming a valve assembly (1) connecting, in mutual fluid communication, a thermostatic anti-freezing valve (2) responsive to a fluid temperature of a fluid in contact with the anti-freezing valve (2) itself, a thermostatic valve (3) responsive to an ambient temperature outside the valve assembly (1), and optionally, a drawing tap (4) being manually openable and closable,
- making an inlet opening (5) in the valve assembly (1),
- making a discharge opening (6) in the valve assembly (1) in communication with the inlet opening (5),
- optionally, making a drawing opening (7) in the valve assembly (1) in communication with the inlet opening (5),
- making a first and only fluid communication (8) in the valve assembly (1) between the inlet opening (5) and the discharge opening (6),
- connecting the inlet opening (5) of the valve assembly (1) to the fluid pipe so that a fluid from the fluid pipe enters the valve assembly (1),
- using the anti-freezing valve (2) to open and close the discharge opening (6) automatically depending on the fluid temperature, so as to automatically discharge the fluid from the valve assembly (1) if there is a risk of the fluid freezing,
- using the thermostatic valve (3) to automatically open and close, depending on the ambient temperature, said first and only fluid communication (8) between the inlet opening (5) and the discharge opening (6),
- using a knob (21) of the thermostatic valve (3) to manually close and/or open the first fluid communication (8), regardless of the ambient temperature,
- optionally, manually operating the drawing tap (4) to close and open the drawing opening (7) and to draw the fluid from the valve assembly (1) and the fluid pipe.

Advantageously, an actuation mechanism (16) of the thermostatic valve (3) comprises:
- a shutter (17),
- a spring system (18),
- a thermostat (19) in thermal contact with the environment outside the valve assembly (1) and adjusted or adjustable to a switching ambient temperature value of the thermostatic valve (3),
- said manual adjustment knob (21) interacting with the thermostat (19) and the shutter (17) and allowing an adjustment or setting of the switching ambient temperature value and, additionally, a manual closing at least of the first fluid communication (8), regardless of the ambient temperature.

With further advantage, the method comprises the step of connecting said fluid pipe as an end duct segment (29), or "dead" duct segment, in fluid communication in a lowest position of a liquid circuit (30) of an air conditioning system (22).

Further features, technical effects ,and advantages of the method have already been described in relation to the description of the valve assembly 1 and not repeated here for brevity reasons.

### Reference numerals:

valve assembly 1
anti-freezing valve 2
thermostatic valve 3
drawing tap 4
inlet opening 5
discharge opening 6
drawing opening 7
first fluid communication 8
valve body 9, 9', 9"
first tubular connection end 10, 10', 10"
second tubular connection end 11, 11', 11"
third tubular connection end 12
second fluid communication 13
tap body 14
connection seat 15, 15', 15"
actuation mechanism 16
shutter 17
spring system 18
thermostat 19
thermal insulation layer 20
adjusting knob 21
air conditioning system 22
vacuum breaker device 23
elbow-shaped tubular portion 24
T-shaped tubular portion 25
tap knob 26
linear tubular portion 27
thermally insulating outer casing 28
end duct segment 29
liquid circuit 30

## Claims

1. A method of anti-freezing protection of a fluid pipe, in particular of an air conditioning system (22), comprising the steps of:
- forming a valve assembly (1) connecting, in mutual fluid communication, a thermostatic anti-freezing valve (2) responsive to a fluid temperature of a fluid in contact with the anti-freezing valve (2) itself, a thermostatic valve (3) responsive to an ambient temperature outside the valve assembly (1),
- making an inlet opening (5) in the valve assembly (1),
- making a discharge opening (6) in the valve assembly (1) in communication with the inlet opening (5),
- making a first and only fluid communication (8) in the valve assembly (1) between the inlet opening (5) and the discharge opening (6),
- connecting the inlet opening (5) of the valve assembly (1) to the fluid pipe so that a fluid from the fluid pipe enters the valve assembly (1),
- using the anti-freezing valve (2) to open and close the discharge opening (6) automatically depending on the fluid temperature, so as to automatically discharge the fluid from the valve assembly (1) if there is a risk of the fluid freezing,
- using the thermostatic valve (3) to automatically open and close, depending on the ambient temperature, said first and only fluid communication (8) between the inlet opening (5) and the discharge opening (6),
- using a knob (21) of the thermostatic valve (3) to manually close and/or open the first fluid communication (8), regardless of the ambient temperature,
wherein an actuation mechanism (16) of the thermostatic valve (3) comprises:
- a shutter (17),
- a spring system (18),
- a thermostat (19) in thermal contact with the environment outside the valve assembly (1) and adjusted or adjustable to a switching ambient temperature value of the thermostatic valve (3),
- said manual adjustment knob (21) interacting with the thermostat (19) and the shutter (17) and allowing an adjustment or setting of the switching ambient temperature value and, additionally, a manual closing at least of the first fluid communication (8), regardless of the ambient temperature.

2. A method of anti-freezing protection according to claim 1, comprising:
- forming the valve assembly (1) by connecting together in fluid communication said anti-freezing valve (2), said thermostatic valve (3), and a manually openable and closable drawing tap (4),
- making a drawing opening (7) in the valve assembly (1) in communication with the inlet opening (5),
- manually operating the drawing tap (4) to close and open the drawing opening (7) and to draw the fluid from the valve assembly (1) and the fluid pipe.

3. A method of anti-freezing protection according to claim 1 or 2, comprising the step of connecting said fluid pipe in fluid communication with a liquid circuit (30) of an air conditioning system (22), so that:
- said fluid pipe forms an end duct segment (29), or a so-called "dead" duct segment, of the liquid circuit (30) in a lowest position of the liquid circuit (30).

4. An anti-freezing valve assembly (1), connectable to a fluid pipe, in particular of an air conditioning system (22), said valve assembly comprising:
- a thermostatic anti-freezing valve (2) responsive to a fluid temperature of a fluid in contact with the anti-freezing valve (2) itself,
- a thermostatic valve (3) responsive to an ambient temperature outside the valve assembly (1).
- an inlet opening (5) connectable to a pipe for a fluid to enter the valve assembly (1),
- a discharge opening (6) in communication with the inlet opening (5) for discharging the fluid from the valve assembly (1),
where:
- the anti-freezing valve (2) is connected so as to open and close the discharge opening (6) depending on the fluid temperature,
- the thermostatic valve (3) is connected so as to automatically open and close, depending on the ambient temperature, a first and only fluid communication (8) between the inlet opening (5) and the discharge opening (6),
said thermostatic valve (3) further having a knob (21) allowing the first fluid communication (8) to be manually closed, regardless of the ambient temperature **characterized in that** an actuation mechanism (16) of the thermostatic valve (3) comprises:
- a shutter (17),
- a spring system (18),
- a thermostat (19) in thermal contact with the environment outside the valve assembly (1) and adjusted or adjustable to a switching ambient temperature value of the thermostatic valve (3),
- said manual adjustment knob (21) interacting with the thermostat (19) and the shutter (17) and allowing an adjustment or setting of the switching ambient temperature value and, additionally, a manual closing at least of the first fluid communication (8), regardless of the ambient temperature.

5. A valve assembly (1) according to claim 4, comprising:
- a manually openable and closable drawing tap (4),
- a drawing opening (7) in communication with the inlet opening (5) for drawing the fluid from the valve assembly (1),
- the drawing tap (4) is connected and manually operable to close and open the drawing opening (7).

6. A valve assembly (1) according to claim 4 or 5, wherein:
- the anti-freezing valve (2) is configured to automatically open the discharge opening (6) when the fluid temperature drops below a predefined fluid threshold value, and to automatically close the first fluid communication (8) when the fluid temperature exceeds the predefined fluid threshold value, and
- the thermostatic valve (3) is configured to automatically open the first fluid communication (8) when the ambient temperature drops below a predefined ambient threshold value, and to automatically close the first fluid communication (8) when the ambient temperature exceeds the predefined ambient threshold value,
- wherein the anti-freezing valve (2) is inserted or screwed into the discharge opening (6).

7. A valve assembly (1) according to any one of claims 5 to 6, wherein the thermostatic valve (3) comprises a three-way, cross-shaped tubular valve body (9) forming a first tubular connection end (10) which forms the inlet opening (5), a second tubular connection end (11) which forms the first fluid communication (8), a third tubular connection end (12) which forms a second fluid communication (13) between the inlet opening (5) and the drawing opening (7), as well as a tubular connection seat (15) which receives an actuation mechanism (16) of the thermostatic valve (3), said valve body (9) being formed in a single piece of metal, wherein the first tubular connection end (10) and the connection seat (15) are arranged opposite to each other, forming the ends of a first line of the cross shape, whereas the second tubular connection end (11) and the third tubular connection end (12) are arranged opposite to each other, forming the ends of a second line of the cross shape, transverse to the first line.

8. A valve assembly (1) according to one of claims 5 to 6, wherein the thermostatic valve (3) comprises a two-way, T-shaped tubular valve body (9') forming a first tubular connection end (10') which forms the inlet opening (5), a second tubular connection end (11') which forms in a single lumen both the first fluid communication (8) and a second fluid communication (13) between the inlet opening (5) and the drawing opening (7), as well as a tubular connection seat (15') which receives an actuation mechanism (16) of the thermostatic valve (3), the valve body (9') being formed in a single piece of metal,
wherein the first tubular connection end (10') and the second tubular connection end (11') are arranged opposite to each other, forming the ends of a first line of the T-shape, whereas the connection seat (15') forms a second line of the T-shape, transverse to the first line.

9. A valve assembly (1) according to one of claims 5 to 6, wherein the thermostatic valve (3) comprises a two-way, T-shaped tubular valve body (9"), which forms:
- a first tubular connection end (10") and a second tubular connection end (11") which together delimit the first fluid communication (8), but which do not form the inlet opening (5) and do not form a second fluid communication (13) between the inlet opening (5) and the drawing opening (7), and
- a tubular connection seat (15") which receives an actuation mechanism (16) of the thermostatic valve (3), the valve body (9") being formed in a single piece of metal,
wherein the first tubular connection end (10") and the second tubular connection end (11") are arranged opposite to each other, forming the ends of a first line of the T-shape, whereas the connection seat (15") forms a second line of the T-shape, transverse to the first line.

10. A valve assembly (1) according to any one of claims 4 to 9, wherein the thermostatic valve (3) is a thermostatic valve for interior radiators, or an actuation mechanism (16) of the thermostatic valve (3) is an actuation mechanism of a thermostatic valve for interior radiators.

11. A valve assembly (1) according to any one of claims 4 to 10, wherein, in a closed position of the thermostatic valve (3), the thermostatic valve (3) closes the inlet opening (5) of the valve assembly (1).

12. A valve assembly (1) according to claim 5, wherein, in a closed position of the thermostatic valve (3), the thermostatic valve (3) interrupts the first fluid communication (8), but does not also interrupt a second fluid communication (13) between the inlet opening (5) and the drawing opening (7),
and/or
wherein, in a closed position of the thermostatic valve (3), the thermostatic valve (3) interrupts both the first fluid communication (8) and a second fluid communication (13) between the inlet opening (5) and the drawing opening (7),
and/or
wherein the interruption of the first fluid communication (8) by actuating the knob (21) also simultaneously interrupts a second fluid communication (13) between the inlet opening (5) and the drawing opening (7),
and/or
where:
- the drawing tap (4) comprises a tubular tap body (14), a tap shutter accommodated inside the tap body (14), and a tap knob (26) arranged outside the tap body (14) and connected to the tap shutter for manually actuating it to be opened and closed,
- the drawing tap (4) is connected to the drawing opening (7).

13. A valve assembly (1) according to any one of claims 4 to 12, being modular, wherein the individual modules:
- anti-freezing valve (2),
- thermostatic valve (3),
- if provided, the drawing tap (4),
are all:
- separable from one another and individually and separately operable, replaceable, and repairable,
- connectable to one another by a threaded connection or threaded ring nut connection.

14. A valve assembly (1) according to any one of claims 4 to 13, comprising an openable/closable thermally insulating outer casing (28), having a variable wall thickness to obtain a thermal insulation layer between the liquid inside the valve assembly (1) and the external environment, but which allows the thermostatic valve (3) to be however in an indirect and/or attenuated heat exchange relationship with the outside.

15. A valve assembly (1) according to one of claims 5 and 6, wherein in a discharge flow path through the valve assembly (1), the inlet opening (5), the thermostatic valve (3), the anti-freezing valve (2,) and the discharge opening (6) are arranged in this order,
whereas in a drawing path through the same valve assembly (1), the inlet opening (5) the thermostatic valve (3), the drawing tap (4), and the drawing opening (7) are arranged in this order,
wherein a valve body (9) of the thermostatic valve (3) forms a branch of a common inlet flow path in the two distinct discharge and drawing flow paths,
or
wherein in a discharge flow path through the valve assembly (1), the inlet opening (5), the thermostatic valve (3), the anti-freezing valve (2), and the discharge opening (6) are arranged in this order,
whereas in a drawing path through the same valve assembly (1), the inlet opening (5) the thermostatic valve (3), the drawing tap (4), and the drawing opening (7) are arranged in this order,
wherein a T-shaped tubular portion placed downstream of a valve body (9') of the thermostatic valve (3) forms a branch of a common inlet flow path in the two distinct discharge and drawing flow paths,
or
wherein in a discharge flow path through the valve assembly (1), the inlet opening (5), the thermostatic valve (3), the anti-freezing valve (2), and the discharge opening (6) are arranged in this order,
whereas in a drawing path through the same valve assembly (1), the inlet opening (5), the drawing tap (4), and the drawing opening (7) are arranged in this order,
wherein a valve body (9") of the thermostatic valve (3) is not involved in the drawing flow path, wherein a T-shaped tubular portion placed upstream of a valve body (9") of the thermostatic valve (3) forms a branch of a common inlet flow path in the two distinct discharge and drawing flow paths.

16. An air conditioning system (22) with a liquid circuit (30) having a "dead" end duct segment (29) on which, in a lowest position of the liquid circuit (30), a valve assembly (1) according to any one of claims 4 to 15 is installed.

## Patentansprüche

1. Verfahren zum Frostschutz einer Flüssigkeitsleitung, insbesondere einer Klimaanlage (22), umfassend die folgenden Schritte:
- Bilden einer Ventilanordnung (1), die ein thermostatisches Frostschutzventil (2), das auf eine Flüssigkeitstemperatur einer Flüssigkeit ansprechbar ist, die in Kontakt mit dem Frostschutzventil (2) selbst steht, und ein thermostatisches Ventil (3), das auf eine Umgebungstemperatur außerhalb der Ventilanordnung (1) ansprechbar ist, miteinander in Fluidverbindung verbindet,
- Herstellen einer Einlassöffnung (5) in der Ventilanordnung (1),
- Herstellen einer Auslassöffnung (6) in der Ventilanordnung (1), die mit der Einlassöffnung (5) in Verbindung steht,
- Herstellen einer ersten und einzigen Fluidverbindung (8) in der Ventilanordnung (1) zwischen der Einlassöffnung (5) und der Auslassöffnung (6),
- Verbinden der Einlassöffnung (5) der Ventilanordnung (1) mit der Flüssigkeitsleitung, sodass eine Flüssigkeit aus der Flüssigkeitsleitung in die Ventilanordnung (1) eintritt,
- Verwenden des Frostschutzventils (2) zum automatischen Öffnen und Schließen der Auslassöffnung (6) abhängig von der Flüssigkeitstemperatur, sodass die Flüssigkeit bei Frostgefahr automatisch aus der Ventilanordnung (1) entleert wird,
- Verwenden des thermostatischen Ventils (3) zum automatischen Öffnen und Schließen der ersten und einzigen Fluidverbindung (8) zwischen der Einlassöffnung (5) und der Auslassöffnung (6) abhängig von der Umgebungstemperatur,
- Verwenden eines Knopfs (21) des thermostatischen Ventils (3) zum manuellen Schließen und/oder Öffnen der ersten Fluidverbindung (8), unabhängig von der Umgebungstemperatur,
wobei ein Betätigungsmechanismus (16) des thermostatischen Ventils (3) umfasst:
- einen Verschluss (17),
- ein Federsystem (18),
- ein Thermostat (19), das thermisch mit der Umgebung außerhalb der Ventilanordnung (1) in Kontakt steht und auf einen Umschalt-Umgebungstemperaturwert des thermostatischen Ventils (3) eingestellt oder einstellbar ist,
- der manuelle Einstellknopf (21) mit dem Thermostat (19) und dem Verschluss (17) interagiert und eine Einstellung oder Festlegung des Umschalt-Umgebungstemperaturwerts sowie auch ein manuelles Schließen mindestens der ersten Fluidverbindung (8) unabhängig von der Umgebungstemperatur, erlaubt.

2. Verfahren zum Frostschutz nach Anspruch 1, umfassend:
- Bilden der Ventilanordnung (1) durch Verbinden zusammen in Fluidverbindung des Frostschutzventils (2), des thermostatischen Ventils (3) und eines manuell öffenbaren- und schließbaren Entnahmehahns (4),
- Herstellen einer Entnahmeöffnung (7) in der Ventilanordnung (1), die mit der Einlassöffnung (5) in Verbindung steht,
- Betätigen manuell des Entnahmehahns (4) zum Öffnen und Schließen der Entnahmeöffnung (7) und zum Entnehmen der Flüssigkeit aus der Ventilanordnung (1) und der Flüssigkeitsleitung.

3. Verfahren zum Frostschutz nach Anspruch 1 oder 2, umfassend den Schritt des Verbindens der Flüssigkeitsleitung in Fluidverbindung mit einem Flüssigkeitskreislauf (30) einer Klimaanlage (22), sodass:
- die Flüssigkeitsleitung ein Endleitungssegment (29) oder ein sogenanntes "Totleitungssegment" des Flüssigkeitskreislaufs (30) an einer niedrigsten Stelle des Flüssigkeitskreislaufs (30) bildet.

4. Frostschutz-Ventilanordnung (1), die an eine Flüssigkeitsleitung angeschlossen werden kann, insbesondere einer Klimaanlage (22), die Ventilanordnung umfassend:
- ein thermostatisches Frostschutzventil (2), das auf eine Flüssigkeitstemperatur einer Flüssigkeit, die in Kontakt mit dem Frostschutzventil (2) steht, ansprechbar ist,
- ein thermostatisches Ventil (3), das auf eine Umgebungstemperatur außerhalb der Ventilanordnung (1) ansprechbar ist,
- eine Einlassöffnung (5), die an eine Leitung angeschlossen werden kann, sodass eine Flüssigkeit in die Ventilanordnung (1) eintreten kann,
- eine Auslassöffnung (6), in Verbindung mit der Einlassöffnung (5) zum Entleeren der Flüssigkeit aus der Ventilanordnung (1),
wobei:
- das Frostschutzventil (2) verbunden ist, um die Auslassöffnung (6) abhängig von der Flüssigkeitstemperatur zu öffnen und zu schließen,
- das thermostatische Ventil (3) verbunden ist, um eine erste und einzige Fluidverbindung (8) zwischen der Einlassöffnung (5) und der Auslassöffnung (6) automatisch abhängig von der Umgebungstemperatur zu öffnen und zu schließen,
wobei das thermostatische Ventil (3) ferner einen Knopf (21) aufweist, der der ersten Fluidverbindung (8) ermöglicht, manuell unabhängig von der Umgebungstemperatur geschlossen zu werden,
**dadurch gekennzeichnet, dass**
ein Betätigungsmechanismus (16) des thermostatischen Ventils (3) umfasst:
- einen Verschluss (17),
- ein Federsystem (18),
- ein Thermostat (19), das thermisch mit der Umgebung außerhalb der Ventilanordnung (1) in Kontakt steht und auf einen Umschalt-Umgebungstemperaturwert des thermostatischen Ventils (3) eingestellt oder einstellbar ist,
- der manuelle Einstellknopf (21), der mit dem Thermostat (19) und dem Verschluss (17) interagiert und eine Einstellung oder Festlegung des Umschalt-Umgebungstemperaturwerts sowie auch ein manuelles Schließen mindestens der ersten Fluidverbindung (8), unabhängig von der Umgebungstemperatur, erlaubt.

5. Ventilanordnung (1) nach Anspruch 4, umfassend:
- einen manuell öffenbaren- und schließbaren Entnahmehahn (4),
- eine Entnahmeöffnung (7), die mit der Einlassöffnung (5) in Verbindung steht, um Flüssigkeit aus der Ventilanordnung (1) zu entnehmen,
- wobei der Entnahmehahn (4) verbunden ist und manuell betätigt werden kann ist, um die Entnahmeöffnung (7) zu schließen und zu öffnen.

6. Ventilanordnung (1) nach Anspruch 4 oder 5, wobei:
- das Frostschutzventil (2) dazu konfiguriert ist, die Auslassöffnung (6) automatisch zu öffnen, wenn die Flüssigkeitstemperatur unter einen vordefinierten Flüssigkeitsschwellenwert sinkt, und die erste Fluidverbindung (8) automatisch zu schließen, wenn die Flüssigkeitstemperatur den vordefinierten Flüssigkeitsschwellenwert überschreitet, und
- das thermostatische Ventil (3) dazu konfiguriert ist, die erste Fluidverbindung (8) automatisch zu öffnen, wenn die Umgebungstemperatur unter einen vordefinierten Umgebungsschwellenwert sinkt, und die erste Fluidverbindung (8) automatisch zu schließen, wenn die Umgebungstemperatur den vordefinierten Umgebungsschwellenwert überschreitet,
- wobei das Frostschutzventil (2) in die Auslassöffnung (6) eingesetzt wird oder eingeschraubt wird.

7. Ventilanordnung (1) nach einem der Ansprüche 5 bis 6, wobei das thermostatische Ventil (3) ein kreuzförmiger, rohrförmiger Dreiwege-Ventilkörper (9) ist, der ein erstes rohrförmiges Anschlussende (10) bildet, das die Einlassöffnung (5) bildet, ein zweites rohrförmiges Anschlussende (11), das die erste Fluidverbindung (8) bildet, ein drittes rohrförmiges Anschlussende (12), das eine zweite Fluidverbindung (13) zwischen der Einlassöffnung (5) und der Entnahmeöffnung (7) bildet, sowie einen rohrförmigen Anschlusssitz (15), der einen Betätigungsmechanismus (16) des thermostatischen Ventils (3) aufnimmt, wobei der Ventilkörper (9) einstückig aus Metall gebildet ist, wobei das erste rohrförmige Anschlussende (10) und der Anschlusssitz (15) einander gegenüberliegen, indem sie die Enden einer ersten Linie der kreuzförmigen Form bilden, während das zweite rohrförmige Anschlussende (11) und das dritte rohrförmige Anschlussende (12) einander gegenüberliegen und die Enden einer zweiten Linie der kreuzförmigen Form bilden, die quer zu der ersten Linie ist.

8. Ventilanordnung (1) nach einem der Ansprüche 5 bis 6, wobei das thermostatische Ventil (3) ein T-förmiger, rohrförmiger Zweiwege-Ventilkörper (9') ist, der ein erstes rohrförmiges Anschlussende (10') bildet, das die Einlassöffnung (5) bildet, ein zweites rohrförmiges Anschlussende (11'), das in einem einzigen Lumen sowohl die erste Fluidverbindung (8) als auch eine zweite Fluidverbindung (13) zwischen der Einlassöffnung (5) und der Entnahmeöffnung (7) bildet, sowie einen rohrförmigen Anschlusssitz (15'), der einen Betätigungsmechanismus (16) des thermostatischen Ventils (3) aufnimmt, wobei der Ventilkörper (9') einstückig aus Metall gebildet ist,
wobei das erste rohrförmige Anschlussende (10') und das zweite rohrförmige Anschlussende (11') einander gegenüberliegen indem sie die Enden einer ersten Linie der T-Form bilden, während der Anschlusssitz (15') eine zweite Linie der T-Form bildet, die quer zu der ersten Linie ist.

9. Ventilanordnung (1) nach einem der Ansprüche 5 bis 6, wobei das thermostatische Ventil (3) ein T-förmiger, rohrförmiger Zweiwege-Ventilkörper (9") ist, der bildet:
- ein erstes rohrförmiges Anschlussende (10") und ein zweites rohrförmiges Anschlussende (11"), die gemeinsam die erste Fluidverbindung (8) begrenzen, aber nicht die Einlassöffnung (5) bilden und nicht eine zweite Fluidverbindung (13) zwischen der Einlassöffnung (5) und der Entnahmeöffnung (7) bilden, und
- einen rohrförmigen Anschlusssitz (15"), der einen Betätigungsmechanismus (16) des thermostatischen Ventils (3) aufnimmt, wobei der Ventilkörper (9") einstückig aus Metall gebildet ist,
wobei das erste rohrförmige Anschlussende (10") und das zweite rohrförmige Anschlussende (11") einander gegenüberliegen, indem sie die Enden einer ersten Linie der T-Form bilden, während der Anschlusssitz (15") eine zweite Linie der T-Form bildet, die quer zu der ersten Linie ist.

10. Ventilanordnung (1) nach einem der Ansprüche 4 bis 9, wobei das thermostatische Ventil (3) ein thermostatisches Ventil für Innenraumheizkörper ist, oder ein Betätigungsmechanismus (16) des thermostatischen Ventils (3) ein Betätigungsmechanismus eines thermostatischen Ventils für Innenraumheizkörper ist.

11. Ventilanordnung (1) nach einem der Ansprüche 4 bis 10, wobei in einer geschlossenen Stellung des thermostatischen Ventils (3) das thermostatische Ventil (3) die Einlassöffnung (5) der Ventilanordnung (1) schließt.

12. Ventilanordnung (1) nach Anspruch 5, wobei in einer geschlossenen Stellung des thermostatischen Ventils (3) das thermostatische Ventil (3) die erste Fluidverbindung (8) unterbricht, aber nicht eine zweite Fluidverbindung (13) zwischen der Einlassöffnung (5) und der Entnahmeöffnung (7) gleichzeitig unterbricht,
und/oder
wobei in einer geschlossenen Stellung des thermostatischen Ventils (3) das thermostatische Ventil (3) sowohl die erste Fluidverbindung (8) als auch eine zweite Fluidverbindung (13) zwischen der Einlassöffnung (5) und der Entnahmeöffnung (7) unterbricht,
und/oder
wobei die Unterbrechung der ersten Fluidverbindung (8) durch Betätigen des Knopfs (21) auch eine zweite Fluidverbindung (13) zwischen der Einlassöffnung (5) und der Entnahmeöffnung (7) gleichzeitig unterbricht,
und/oder wobei:
- der Entnahmehahn (4) einen rohrförmigen Hahnkörper (14), einen Hahnverschluss, der in dem Hahnkörper (14) aufgenommen wird und einen Hahnknopf (26), der außerhalb des Hahnkörpers (14) angeordnet ist und mit dem Hahnverschluss verbunden ist, umfasst, um diesen manuell zu betätigen, um ihn zu öffnen und zu schließen,
- der Entnahmehahn (4) mit der Entnahmeöffnung (7) verbunden ist.

13. Ventilanordnung (1) nach einem der Ansprüche 4 bis 12, die modular ausgebildet ist, wobei die einzelnen Module:
- Frostschutzventil (2),
- thermostatisches Ventil (3),
- sofern vorhanden, der Entnahmehahn (4),
alle:
- voneinander trennbar sind und einzeln sowie separat betätigt, ausgetauscht und repariert werden können,
- durch eine Gewindeverbindung oder eine Gewinde-Ring-Mutterverbindung miteinander verbindbar sind.

14. Ventilanordnung (1) nach einem der Ansprüche 4 bis 13, umfassend ein öffenbares-/schließbares wärmeisolierendes Außengehäuse (28) mit variabler Wanddicke, um eine Wärmedämmschicht zwischen der Flüssigkeit innen der Ventilanordnung (1) und der Außenumgebung zu erhalten, das jedoch dem thermostatischen Ventil (3) erlaubt, in einer indirekten und/oder gedämpften Wärmeaustauschsbeziehung mit der Außenseite zu stehen.

15. Ventilanordnung (1) nach einem der Ansprüche 5 und 6, wobei in einem Auslassströmungspfad durch die Ventilanordnung (1) die Einlassöffnung (5), das thermostatische Ventil (3), das Frostschutzventil (2) und die Auslassöffnung (6) in dieser Reihenfolge angeordnet sind,
während in einem Entnahmepfad durch dieselbe Ventilanordnung (1) die Einlassöffnung (5), das thermostatische Ventil (3), der Entnahmehahn (4) und die Entnahmeöffnung (7) in dieser Reihenfolge angeordnet sind,
wobei ein Ventilkörper (9) des thermostatischen Ventils (3) einen Abzweig eines gemeinsamen Einlassströmungspfades in den zwei verschiedenen Entleerungs- und Entnahmeströmungspfaden bildet,
oder
wobei in einem Auslassströmungspfad durch die Ventilanordnung (1) die Einlassöffnung (5), das thermostatische Ventil (3), das Frostschutzventil (2) und die Auslassöffnung (6) in dieser Reihenfolge angeordnet sind,
während in einem Entnahmepfad durch dieselbe Ventilanordnung (1) die Einlassöffnung (5), das thermostatische Ventil (3), der Entnahmehahn (4) und die Entnahmeöffnung (7) in dieser Reihenfolge angeordnet sind,
wobei ein T-förmiger rohrförmiger Abschnitt, der stromabwärts eines Ventilkörpers (9') des thermostatischen Ventils (3) angeordnet ist, einen Abzweig eines gemeinsamen Einlassströmungspfades in den zwei verschiedenen Auslass- und Entnahmeströmungspfaden bildet,
oder
wobei in einem Auslassströmungspfad durch die Ventilanordnung (1) die Einlassöffnung (5), das thermostatische Ventil (3), das Frostschutzventil (2) und die Auslassöffnung (6) in dieser Reihenfolge angeordnet sind,
während in einem Entnahmepfad durch dieselbe Ventilanordnung (1) die Einlassöffnung (5), der Entnahmehahn (4) und die Entnahmeöffnung (7) in dieser Reihenfolge angeordnet sind,
wobei ein Ventilkörper (9") des thermostatischen Ventils (3) nicht von dem Entnahmeströmungspfad betroffen ist, wobei ein T-förmiger rohrförmiger Abschnitt, der stromaufwärts eines Ventilkörpers (9") des thermostatischen Ventils (3) angeordnet ist, einen Abzweig eines gemeinsamen Einlassströmungspfades in den zwei verschiedenen Auslass- und Entnahmeströmungspfaden bildet.

16. Klimaanlage (22) mit einem Flüssigkeitskreislauf (30), der ein "Totenendleitungssegment" (29) aufweist, an dem in einer niedrigsten Position des Flüssigkeitskreislaufs (30) eine Ventilanordnung (1) nach einem der Ansprüche 4 bis 15 installiert ist.

## Revendications

1. Procédé de protection contre le gel d'une conduite de fluide, en particulier d'un système de climatisation (22), comprenant les étapes consistant à :
- former un ensemble de vannes (1) connectant, en communication fluidique mutuelle, une vanne antigel thermostatique (2) sensible à une température de fluide d'un fluide en contact avec ladite vanne antigel (2) elle-même, une vanne thermostatique (3) sensible à une température ambiante extérieure à l'ensemble de vannes (1),
- réaliser une ouverture d'entrée (5) dans l'ensemble de vannes (1),
- réaliser une ouverture de décharge (6) dans l'ensemble de vannes (1) en communication avec l'ouverture d'entrée (5),
- réaliser une première et unique communication fluidique (8) dans l'ensemble de vannes (1) entre l'ouverture d'entrée (5) et l'ouverture de décharge (6),
- raccorder l'ouverture d'entrée (5) de l'ensemble de vannes (1) à la conduite de fluide de sorte qu'un fluide provenant de la conduite de fluide pénètre dans l'ensemble de vannes (1),
- utiliser la vanne antigel (2) pour ouvrir et fermer l'ouverture de décharge (6) automatiquement en fonction de la température du fluide, de manière à décharger automatiquement le fluide de l'ensemble de vannes (1) s'il existe un risque de gel du fluide,
- utiliser la vanne thermostatique (3) pour ouvrir et fermer automatiquement, en fonction de la température ambiante, ladite première et unique communication fluidique (8) entre l'ouverture d'entrée (5) et l'ouverture de décharge (6),
- utiliser un bouton (21) de la vanne thermostatique (3) pour fermer et/ou ouvrir manuellement la première communication fluidique (8), indépendamment de la température ambiante,
dans lequel un mécanisme d'actionnement (16) de la vanne thermostatique (3) comprend :
- un obturateur (17),
- un système de ressorts (18),
- un thermostat (19) en contact thermique avec l'environnement extérieur à l'ensemble de vannes (1) et ajusté ou ajustable à une valeur de température ambiante de commutation de la vanne thermostatique (3),
- ledit bouton de réglage manuel (21) interagissant avec le thermostat (19) et l'obturateur (17) et permettant un réglage ou un ajustement de la valeur de température ambiante de commutation et, en outre, une fermeture manuelle au moins de la première communication fluidique (8), indépendamment de la température ambiante.

2. Procédé de protection contre le gel selon la revendication 1, comprenant :
- former l'ensemble de vannes (1) en connectant entre eux, en communication fluidique, ladite vanne antigel (2), ladite vanne thermostatique (3), et un robinet de puisage (4) pouvant être ouvert et fermé manuellement,
- réaliser une ouverture de puisage (7) dans l'ensemble de vannes (1) en communication avec l'ouverture d'entrée (5),
- actionner manuellement le robinet de puisage (4) pour fermer et ouvrir l'ouverture de puisage (7) et pour puiser le fluide de l'ensemble de vannes (1) et de la conduite de fluide.

3. Procédé de protection contre le gel selon la revendication 1 ou 2, comprenant l'étape consistant à raccorder ladite conduite de fluide en communication fluidique avec un circuit de liquide (30) d'un système de climatisation (22), de sorte que :
- ladite conduite de fluide forme un segment de conduit terminal (29), ou un segment de conduit dit « mort », du circuit de liquide (30) en une position la plus basse du circuit de liquide (30).

4. Ensemble de vannes antigel (1), pouvant être raccordé à une conduite de fluide, en particulier d'un système de climatisation (22), ledit ensemble de vannes comprenant:
- une vanne antigel thermostatique (2) sensible à une température de fluide d'un fluide en contact avec ladite vanne antigel (2) elle-même,
- une vanne thermostatique (3) sensible à une température ambiante extérieure à l'ensemble de vannes (1),
- une ouverture d'entrée (5) pouvant être raccordée à une conduite afin qu'un fluide pénètre dans l'ensemble de vannes (1),
- une ouverture de décharge (6) en communication avec l'ouverture d'entrée (5) pour décharger le fluide de l'ensemble de vannes (1),
dans lequel :
- la vanne antigel (2) est connectée de manière à ouvrir et fermer l'ouverture de décharge (6) en fonction de la température du fluide,
- la vanne thermostatique (3) est connectée de manière à ouvrir et fermer automatiquement, en fonction de la température ambiante, une première et unique communication fluidique (8) entre l'ouverture d'entrée (5) et l'ouverture de décharge (6),
ladite vanne thermostatique (3) comprenant en outre un bouton (21) permettant de fermer manuellement la première communication fluidique (8), indépendamment de la température ambiante
**caractérisé en ce que**
un mécanisme d'actionnement (16) de la vanne thermostatique (3) comprend :
- un obturateur (17),
- un système de ressorts (18),
- un thermostat (19) en contact thermique avec l'environnement extérieur à l'ensemble de vannes (1) et ajusté ou ajustable à une valeur de température ambiante de commutation de la vanne thermostatique (3),
- ledit bouton de réglage manuel (21) interagissant avec le thermostat (19) et l'obturateur (17) et permettant un réglage ou un ajustement de la valeur de température ambiante de commutation et, en outre, une fermeture manuelle au moins de la première communication fluidique (8), indépendamment de la température ambiante.

5. Ensemble de vannes (1) selon la revendication 4, comprenant :
- un robinet de puisage (4) pouvant être ouvert et fermé manuellement,
- une ouverture de puisage (7) en communication avec l'ouverture d'entrée (5) pour puiser le fluide de l'ensemble de vannes (1),
- le robinet de puisage (4) étant connecté et actionnable manuellement pour fermer et ouvrir l'ouverture de puisage (7).

6. Ensemble de vannes (1) selon la revendication 4 ou 5, dans lequel :
- la vanne antigel (2) est configurée pour ouvrir automatiquement l'ouverture de décharge (6) lorsque la température du fluide descend en dessous d'une valeur seuil de fluide prédéfinie, et pour fermer automatiquement la première communication fluidique (8) lorsque la température du fluide dépasse ladite valeur seuil de fluide prédéfinie, et
- la vanne thermostatique (3) est configurée pour ouvrir automatiquement la première communication fluidique (8) lorsque la température ambiante descend en dessous d'une valeur seuil ambiante prédéfinie, et pour fermer automatiquement la première communication fluidique (8) lorsque la température ambiante dépasse ladite valeur seuil ambiante prédéfinie,
- dans lequel la vanne antigel (2) est insérée ou vissée dans l'ouverture de décharge (6).

7. Ensemble de vannes (1) selon l'une quelconque des revendications 5 à 6, dans lequel la vanne thermostatique (3) comprend un corps de vanne tubulaire en forme de croix à trois voies (9) formant une première extrémité de raccordement tubulaire (10) qui forme l'ouverture d'entrée (5), une deuxième extrémité de raccordement tubulaire (11) qui forme la première communication fluidique (8), une troisième extrémité de raccordement tubulaire (12) qui forme une seconde communication fluidique (13) entre l'ouverture d'entrée (5) et l'ouverture de puisage (7), ainsi qu'un siège de raccordement tubulaire (15) qui reçoit un mécanisme d'actionnement (16) de la vanne thermostatique (3), ledit corps de vanne (9) étant formé en une seule pièce métallique, dans lequel la première extrémité de raccordement tubulaire (10) et le siège de raccordement (15) sont disposés en opposition l'un par rapport à l'autre, formant les extrémités d'une première ligne de la forme en croix, tandis que la deuxième extrémité de raccordement tubulaire (11) et la troisième extrémité de raccordement tubulaire (12) sont disposées en opposition l'une par rapport à l'autre, formant les extrémités d'une seconde ligne de la forme en croix, transversale à la première ligne.

8. Ensemble de vannes (1) selon l'une quelconque des revendications 5 à 6, dans lequel la vanne thermostatique (3) comprend un corps de vanne tubulaire en forme de T à deux voies (9') formant une première extrémité de raccordement tubulaire (10') qui forme l'ouverture d'entrée (5), une deuxième extrémité de raccordement tubulaire (11') qui forme, dans une seule lumière, à la fois la première communication fluidique (8) et une seconde communication fluidique (13) entre l'ouverture d'entrée (5) et l'ouverture de puisage (7), ainsi qu'un siège de raccordement tubulaire (15') qui reçoit un mécanisme d'actionnement (16) de la vanne thermostatique (3), ledit corps de vanne (9') étant formé en une seule pièce métallique,
dans lequel la première extrémité de raccordement tubulaire (10') et la deuxième extrémité de raccordement tubulaire (11') sont disposées en opposition l'une par rapport à l'autre, formant les extrémités d'une première ligne de la forme en T, tandis que le siège de raccordement (15') forme une seconde ligne de la forme en T, transversale à la première ligne.

9. Ensemble de vannes (1) selon l'une quelconque des revendications 5 à 6, dans lequel la vanne thermostatique (3) comprend un corps de vanne tubulaire en forme de T à deux voies (9"), qui forme :
- une première extrémité de raccordement tubulaire (10") et une deuxième extrémité de raccordement tubulaire (11") qui délimitent ensemble la première communication fluidique (8), mais qui ne forment pas l'ouverture d'entrée (5) et ne forment pas une seconde communication fluidique (13) entre l'ouverture d'entrée (5) et l'ouverture de puisage (7), et
- un siège de raccordement tubulaire (15") qui reçoit un mécanisme d'actionnement (16) de la vanne thermostatique (3), ledit corps de vanne (9") étant formé en une seule pièce métallique,
dans lequel la première extrémité de raccordement tubulaire (10") et la deuxième extrémité de raccordement tubulaire (11") sont disposées en opposition l'une par rapport à l'autre, formant les extrémités d'une première ligne de la forme en T, tandis que le siège de raccordement (15") forme une seconde ligne de la forme en T, transversale à la première ligne.

10. Ensemble de vannes (1) selon l'une quelconque des revendications 4 à 9, dans lequel la vanne thermostatique (3) est une vanne thermostatique pour radiateurs d'intérieur, ou un mécanisme d'actionnement (16) de la vanne thermostatique (3) est un mécanisme d'actionnement d'une vanne thermostatique pour radiateurs d'intérieur.

11. Ensemble de vannes (1) selon l'une quelconque des revendications 4 à 10, dans lequel, en position fermée de la vanne thermostatique (3), la vanne thermostatique (3) ferme l'ouverture d'entrée (5) de l'ensemble de vannes (1).

12. Ensemble de vannes (1) selon la revendication 5, dans lequel, en position fermée de la vanne thermostatique (3), la vanne thermostatique (3) interrompt la première communication fluidique (8), mais n'interrompt pas aussi une seconde communication fluidique (13) entre l'ouverture d'entrée (5) et l'ouverture de puisage (7),
et/ou
dans lequel, en position fermée de la vanne thermostatique (3), la vanne thermostatique (3) interrompt à la fois la première communication fluidique (8) et une seconde communication fluidique (13) entre l'ouverture d'entrée (5) et l'ouverture de puisage (7),
et/ou
dans lequel l'interruption de la première communication fluidique (8) par actionnement du bouton (21) interrompt également simultanément une seconde communication fluidique (13) entre l'ouverture d'entrée (5) et l'ouverture de puisage (7),
et/ou dans lequel :
- le robinet de puisage (4) comprend un corps de robinet tubulaire (14), un obturateur de robinet logé à l'intérieur du corps de robinet (14), et un bouton de robinet (26) disposé à l'extérieur du corps de robinet (14) et connecté à l'obturateur de robinet pour l'actionner manuellement en ouverture et en fermeture,
- le robinet de puisage (4) est connecté à l'ouverture de puisage (7).

13. Ensemble de vannes (1) selon l'une quelconque des revendications 4 à 12, étant modulaire, dans lequel les modules individuels :
- vanne antigel (2),
- vanne thermostatique (3),
- s'il y a lieu, robinet de puisage (4), sont tous :
- séparables les uns des autres et utilisables, remplaçables et réparables individuellement et séparément,
- connectables les uns aux autres par un raccord fileté ou un raccord avec écrou fileté.

14. Ensemble de vannes (1) selon l'une quelconque des revendications 4 à 13, comprenant une enveloppe extérieure isolante thermiquement ouvrable/fermable (28), présentant une épaisseur de paroi variable pour obtenir une couche d'isolation thermique entre le liquide à l'intérieur de l'ensemble de vannes (1) et l'environnement extérieur, mais qui permet néanmoins que la vanne thermostatique (3) soit en relation d'échange thermique indirect et/ou atténué avec l'extérieur.

15. Ensemble de vannes (1) selon l'une quelconque des revendications 5 et 6, dans lequel, dans un trajet d'écoulement de décharge à travers l'ensemble de vannes (1), l'ouverture d'entrée (5), la vanne thermostatique (3), la vanne antigel (2) et l'ouverture de décharge (6) sont disposées dans cet ordre,
tandis que dans un trajet de puisage à travers le même ensemble de vannes (1), l'ouverture d'entrée (5), la vanne thermostatique (3), le robinet de puisage (4) et l'ouverture de puisage (7) sont disposés dans cet ordre,
dans lequel un corps de vanne (9) de la vanne thermostatique (3) forme une dérivation d'un trajet d'écoulement d'entrée commun dans les deux trajets distincts de décharge et de puisage,
ou
dans lequel, dans un trajet d'écoulement de décharge à travers l'ensemble de vannes (1), l'ouverture d'entrée (5), la vanne thermostatique (3), la vanne antigel (2) et l'ouverture de décharge (6) sont disposées dans cet ordre,
tandis que dans un trajet de puisage à travers le même ensemble de vannes (1), l'ouverture d'entrée (5), la vanne thermostatique (3), le robinet de puisage (4) et l'ouverture de puisage (7) sont disposés dans cet ordre,
dans lequel une portion tubulaire en forme de T placée en aval d'un corps de vanne (9') de la vanne thermostatique (3) forme une dérivation d'un trajet d'écoulement d'entrée commun dans les deux trajets distincts de décharge et de puisage,
ou
dans lequel, dans un trajet d'écoulement de décharge à travers l'ensemble de vannes (1), l'ouverture d'entrée (5), la vanne thermostatique (3), la vanne antigel (2) et l'ouverture de décharge (6) sont disposées dans cet ordre,
tandis que dans un trajet de puisage à travers le même ensemble de vannes (1), l'ouverture d'entrée (5), le robinet de puisage (4) et l'ouverture de puisage (7) sont disposés dans cet ordre,
dans lequel un corps de vanne (9") de la vanne thermostatique (3) n'est pas impliqué dans le trajet d'écoulement de puisage, dans lequel une portion tubulaire en forme de T placée en amont d'un corps de vanne (9") de la vanne thermostatique (3) forme une dérivation d'un trajet d'écoulement d'entrée commun dans les deux trajets distincts de décharge et de puisage.

16. Système de climatisation (22) avec un circuit de liquide (30) ayant un segment de conduit terminal « mort » (29) sur lequel, en une position la plus basse du circuit de liquide (30), un ensemble de vannes (1) selon l'une quelconque des revendications 4 à 15 est installé.
